# EUROPEAN PATENT APPLICATION

(11) **EP 4 813 279 A1**
(43) Date of publication of application: **30.09.2026**
(21) Application number: 24924912.9
(22) Date of filing: 19.12.2024
(51) Int. Cl.: A47L 15/42, F21V 33/00, H05B 47/115, F21V 23/04, E05B 5/02, E05B 5/00, G01S 13/08, G01H 17/00

(54) **DISHWASHER**

(30) Priority: 16.02.2024 KR 20240022964
(71) Applicant: LG Electronics Inc., Yeongdeungpo-gu Seoul 07336 (KR)
(72) Inventor: JO, Yeon A, Seoul 06772 (KR); KIM, Hyun Ki, Seoul 06772 (KR); CHOI, Dong Jun, Seoul 06772 (KR); KIM, Yongnam, Seoul 06772 (KR)
(74) Representative: Ter Meer und Partner mbB
(86) International application number: PCT/KR2024/020762
(87) International publication number: WO 2025/173887

(57) **Abstract**

Disclosed is a dish washer configured such that when a user's intention to open a door is identified as being present while a washing course is in progress, a handle extends to protrude in a frontward direction while the washing process in progress has been stopped, thereby securing convenience and safety simultaneously.

## Description

### [Technical Field]

The present disclosure relates to a dish washer. More specifically, the present disclosure relates to a dish washer configured such that when a user's intention to open a door is identified as being present while a washing course is in progress, a handle extends to protrude in a frontward direction while the washing process in progress has been stopped, thereby securing convenience and safety simultaneously.

### [Background Art]

A dish washer is an apparatus that washes dishes and cooking utensils as washing targets stored therein by spraying washing water thereto. In this regard, the washing water may contain washing detergent.

A dish washer generally includes a washing tub having a washing space defined therein, a dish rack that accommodates therein a washing target inside the washing tub, a spraying arm that sprays the washing water into the dish rack, and a sump that stores therein water and supplies the washing water to the spraying arm.

Using this dish washer may allow a time and effort required to wash the dishes and other washing targets after a meal to be reduced, thereby contributing to user convenience.

Generally, the dish washer is configured to perform a washing cycle for washing a washing target, a rinsing cycle for rinsing a washing target, and a drying cycle for drying a washing target that has been washed and rinsed.

In order to store dishes inside the dish washer before the cycle proceeds, and to withdraw the washed and dried dishes after the cycle has been completed, the user should open and close the door.

In this regard, it is common that the door is provided with a handle that the user may grasp as a means for facilitating the opening and closing of the door.

In this regard, Korean Patent Application Publication No. 1020200082114 (Prior Document 001) discloses a dish washer configured such that a depressed type handle which the user grasps when opening and closing the door is provided in the door.

The handle of the dish washer as disclosed in Prior Document 001 is provided in a form of a grip groove configured to be depressed from a front surface of the door toward a rear surface thereof by a predetermined depth.

In another example, Korean Patent Application Publication No. 1020200020510 (Prior Document 002) discloses a dish washer configured such that a protruding type handle that the user grasps when opening and closing the door is disposed on the door.

The handle of the dish washer disclosed in Prior Document 002 has a predetermined protruding height in a frontward direction from a front surface of the door, and is always in a protruding state and has a 90 degrees-rotated U shape.

### [Disclosure]

### [Technical Problem]

The handle disclosed in the above-mentioned prior document 001 is provided in a depressed form from a portion of the front surface of the door toward an inside of the door. A separate cover, etc., is not disposed on the handle, and thus the handle is always exposed to an outside.

Therefore, the handle disclosed in the prior document 001 has a structure in which external foreign substances such as dusts cannot help but accumulate in the depressed space into which the hand of the user is inserted. This requires frequent cleaning of the handle, thereby causing inconvenience to the user.

Furthermore, the handle disclosed in prior document 001 has a problem in that the handle may act as an element that deteriorates the aesthetic sense of the front surface appearance of the door because the portion of the front surface of the door is concavely depressed.

In contrast thereto, the handle disclosed in the prior document 002 has an advantage in that it may partially solve the problem of the prior document 001 because it is always present in a protruding state in the frontward direction of the door.

However, the handle disclosed in the prior document 002 has a problem in that a user who does not recognize the protruding portion from the front surface of the door may collide with the protruding portion, thereby causing injury to the user.

Furthermore, the handle disclosed in the prior document 002 has a problem in that it may collide with dishes and other kitchenware when the dishes are withdrawn from the dish washer and thus there is a very high possibility of causing damage to the handle itself or items such as dishes.

Thus, the present disclosure is designed to solve the above problems of the prior arts. Thus, a first purpose of the present disclosure is to provide a dish washer configured such that the handle is configured to extend in a protruding manner in a frontward direction from the door only when necessary, such as when opening or closing the door, so that external foreign substances such as dusts are prevented from accumulating on the handle, thereby maintaining a clean state of the handle and significantly improving user convenience.

Furthermore, a second purpose of the present disclosure is to provide a dish washer configured such that the handle is configured to at least partially retract into the inside of the door when the use of the handle is unnecessary, thereby significantly reducing the possibility of user injury and handle damage that may occur due to collision of the user with the handle.

Furthermore, a third purpose of the present disclosure is to provide a dish washer configured such that when a user's intention to open a door is identified as being present while a washing course is in progress, a handle extends to protrude in a frontward direction while the washing process in progress has been stopped, thereby securing convenience and safety simultaneously.

Purposes of the present disclosure are not limited to the above-mentioned purpose. Other purposes and advantages of the present disclosure that are not mentioned may be understood based on following descriptions, and may be more clearly understood based on embodiments of the present disclosure. Further, it will be easily understood that the purposes and advantages of the present disclosure may be realized using means shown in the claims and combinations thereof.

### [Technical Solution]

One aspect of the present disclosure provides a dish washer comprising: a tub constructed to accommodate a dish therein and to have an open front surface and a washing space defined therein communicating with the open front surface, wherein one washing course selected from among a plurality of washing courses is performed in the washing space, wherein each of the plurality of washing courses is composed of a combination of detailed cycles; a door configured to open or close the open front surface of the tub; a handle configured to automatically reciprocate between an extended position and a retracted position, wherein at the extend position, the handle protrudes in a frontward direction from the door, wherein at the retracted position, the handle is at least partially accommodated within the door; a handle driver disposed within the door and configured to move the handle from the retracted position toward the extended position or from the extended position toward the retracted position; and a controller configured to control power to be supplied to the handle driver to determine whether to operate the handle driver, wherein the controller is configured to control the handle driver to move the handle forwards from the retracted position toward the extended position, based on absence or presence of a user's intention to open the door.

In accordance with some embodiments of the dish washer, the controller configured to control the handle driver to move the handle forwards from the retracted position toward the extended position, based on absence or presence of a user's intention to open the door is further configured to control the handle driver to move the handle forwards from the retracted position toward the extended position, based on absence or presence of a user's intention to open the door, before the washing course starts or after the washing course has been completed.

In accordance with some embodiments of the dish washer, the controller configured to control the handle driver to move the handle forwards from the retracted position toward the extended position, based on absence or presence of a user's intention to open the door, before the washing course starts or after the washing course has been completed is further configured to: determine whether the user has an intention to open the door before the washing course starts or after the washing course has been completed; and upon determination that the user has the intention to open the door, supply power to the handle driver to operate the handle driver so that the handle moves forwards from the retracted position toward the extended position.

In accordance with some embodiments of the dish washer, the dish washer further comprises a proximity sensor for detecting whether the user has approached a position within a predetermined detection range from the door, wherein the controller configured to determine whether the user has the intention to open the door is further configured to: receive an output signal from the proximity sensor; determine whether the user has approached the position within the predetermined detection range, based on the output signal received from the proximity sensor; and upon determination that the user has approached the position within the predetermined detection range, determine whether a state in which that the user has approached the position has lasted for a predetermined set time duration; and upon determination that the state in which that the user has approached the position has lasted for the predetermined set time duration; determine that the user has the intention to open the door.

In accordance with some embodiments of the dish washer, the proximity sensor includes a radar sensor disposed inside the door and configured to detect whether the user approaches the door through a sensor hole extending through a top surface of the door, wherein a sensing surface of the radar sensor is oriented in a tilted state so as to face in a frontward and upward direction of the door.

In accordance with some embodiments of the dish washer, a tilting angle of the sensing surface of the radar sensor is in a range of 25 degrees inclusive to 35 degrees inclusive.

In accordance with some embodiments of the dish washer, upon determination that the user having a height greater than or equal to a minimum detection height of the proximity sensor in a vertical direction has approached a position having a distance smaller than or equal to a maximum detection distance from the proximity sensor in a horizontal direction, the controller is further configured to determine that the user has approached the position within the predetermined detection range.

In accordance with some embodiments of the dish washer, the minimum detection height is in a range of 100 cm inclusive to 110 cm inclusive.

In accordance with some embodiments of the dish washer, the maximum detection distance is in a range of 75 cm inclusive to 85 cm inclusive.

In accordance with some embodiments of the dish washer, the set time duration is in a range of 0.9 seconds to 1.1 seconds inclusive.

In accordance with some embodiments of the dish washer, the dish washer further comprises a light-source element disposed inside the handle, and configured to receive power to generate visible light, and irradiate the generated visible light to an outside out of the handle, wherein the controller configured to control the handle driver to move the handle forwards from the retracted position toward the extended position, based on absence or presence of a user's intention to open the door, before the washing course starts or after the washing course has been completed is further configured to: upon determination that the user has the intention to open the door, supply power to the light-source element to turn on the light-source element before the operation of the handle driver is started or simultaneously with the start of the operation of the handle driver.

In accordance with some embodiments of the dish washer, the controller configured to control the handle driver to move the handle forwards from the retracted position toward the extended position, based on absence or presence of a user's intention to open the door is further configured to control the handle driver to move the handle forwards from the retracted position toward the extended position, based on absence or presence of a user's intention to open the door, while the washing course is in progress.

In accordance with some embodiments of the dish washer, the controller configured to control the handle driver to move the handle forwards from the retracted position toward the extended position, based on absence or presence of a user's intention to open the door, while the washing course is in progress is further configured to: determine whether the user has an intention to open the door while the washing course is in progress; and upon determination that the user has the intention to open the door, supply power to the handle driver to operate the handle driver so that the handle moves forwards from the retracted position toward the extended position.

In accordance with some embodiments of the dish washer, the dish washer further comprises: a proximity sensor for detecting whether the user has approached a position within a predetermined detection range from the door; and a first vibration sensor and a second vibration sensor respectively positioned at different locations inside the door and configured to detect the user's knock-on input through the door, wherein the controller configured to determine whether the user has the intention to open the door is further configured to: receive an output signal from the proximity sensor; determine whether the user has approached the position within the predetermined detection range, based on the output signal received from the proximity sensor; upon determination that the user has approached the position within the predetermined detection range, determine whether a state in which that the user has approached the position has lasted for a predetermined set time duration; upon determination that the state in which that the user has approached the position has lasted for the predetermined set time duration, receive a first vibration signal from the first vibration sensor and a second vibration signal from the second vibration sensor; calculate a maximum amplitude of the first vibration signal received from the first vibration sensor, and a maximum amplitude of the second vibration signal received from the second vibration sensor; and compare the maximum amplitude of the first vibration signal with the maximum amplitude of the second vibration signal; and upon determination that the maximum amplitude of the first vibration signal is greater than the maximum amplitude of the second vibration signal, determine that the user has the intention to open the door.

In accordance with some embodiments of the dish washer, the first vibration sensor is closer to a front surface of the door than the second vibration sensor is.

In accordance with some embodiments of the dish washer, the first vibration sensor detects vibration in a first axial direction, wherein the second vibration sensor detects vibration in a second axial direction, wherein the first axial direction and the second axial direction are orthogonal to each other.

In accordance with some embodiments of the dish washer, the first axial vibration is a horizontal vibration, and the second axial vibration is a vertical vibration.

In accordance with some embodiments of the dish washer, the dish washer further comprises a light-source element disposed inside the handle, and configured to receive power to generate visible light, and irradiate the generated visible light to an outside out of the handle, wherein the controller configured to control the handle driver to move the handle forwards from the retracted position toward the extended position, based on absence or presence of a user's intention to open the door, while the washing course is progress is further configured to: upon determination that the maximum amplitude of the first vibration signal is greater than the maximum amplitude of the second vibration signal, supply power to the light-source element to turn on the light-source element before or simultaneously with start of the operation of the handle driver.

In accordance with some embodiments of the dish washer, the controller configured to control the handle driver to move the handle forwards from the retracted position toward the extended position, based on absence or presence of a user's intention to open the door, while the washing course is progress is further configured to: when the forward movement of the handle to the extended position has been completed after operating the handle driver, stop the operation of the handle driver; and after the handle driver starts to operate, temporarily stop the washing course in progress.

In accordance with some embodiments of the dish washer, the controller configured to temporarily stop the washing course in progress is further configured to temporarily stop the washing course in progress before the operation of the handle driver is stopped or simultaneously with the stop of the operation of the handle driver.

### [Advantageous Effects]

Thus, in the dish washer according to the present disclosure, external foreign substances such as dusts may be prevented from accumulating on the handle, thereby maintaining a clean state of the handle and significantly improving user convenience.

Furthermore, in the dish washer according to the present disclosure, in the retracted state of the handle, the user feels a sense of unity of the handle and the door with each other, thereby improving the aesthetics of the appearance of the dish washer.

Furthermore, the dish washer according to the present disclosure may significantly reduce the possibility of user injury and handle damage that may occur due to collision of the user with the handle.

Furthermore, in the dish washer according to the present disclosure, when a user's intention to open the door is identified as being present while a washing course is in progress, the handle extends to protrude in a frontward direction while the washing process in progress has been stopped, thereby securing convenience and safety simultaneously.

In addition to the above-mentioned effects, the specific effects of the present disclosure as not mentioned will be described below along with the descriptions of the specific details for carrying out the present disclosure.

### [Description of Drawings]

FIG. 1 is a front perspective view of a dish washer according to one embodiment of the present disclosure.
FIG. 2 is a schematic cross-sectional view of the dish washer as shown in FIG. 1.
FIG. 3 is a front perspective view showing a state in which a handle of a dish washer according to an embodiment of the present disclosure has been displaced to a retracted position.
FIG. 4 is a front perspective view showing a state in which the handle as shown in FIG. 3 has been displaced to an extended position.
FIG. 5 is an enlarged side view of FIG. 3.
FIG. 6 is a rear perspective view of the door as shown in FIG. 3 and shows a state in which a rear panel of the door is removed.
FIG. 7 is a rear perspective view of a handle driver as shown in FIG. 5.
FIG. 8 is an exploded perspective view of the handle driver as shown in FIG. 7.
FIG. 9 is an exploded perspective view of a pivot link, a link connector, and a connection pin among components of the handle driver as shown in FIG. 8.
FIG. 10 is a side view illustrating an operation of the handle driver to initiate movement from the retracted position to the extended position for the handle.
FIG. 11 is a side view illustrating a state in which movement to the extended position of the handle has been completed.
FIG. 12 is a side view illustrating an operation of the handle driver to initiate movement from the extended position to the retracted position of the handle.
FIG. 13 is an enlarged view of a portion of FIG. 11, and is a diagram illustrating a structure that prevents the handle from being moved backwards under an external force applied to the handle.
FIG. 14 is a partial enlarged view showing a state in which the handle and the handle driver have been removed from the door.
FIG. 15 is a rear perspective view illustrating a handle frame on which the handle and the handle driver are installed which supports the handle and the handle driver.
FIG. 16 is an exploded perspective view for illustrating a detailed configuration of the handle.
FIG. 17 is a side view showing a state in which light is irradiated to an outside from the handle during a process in which the handle is moving to the extended position.
FIG. 18 is a schematic diagram for illustrating a configuration for recognizing a user and a pet in a distinguishing manner from each other using a proximity sensor as a first means disposed on a top surface of a door to determine absence or presence of the user's intention to open the door.
FIG. 19 and FIG. 20 are vertical cross-sectional views for illustrating a state in which the proximity sensor as shown in FIG. 18 is disposed inside the door.
FIG. 21 is a vertical cross-sectional view for illustrating relative positions at which a first vibration sensor and a second vibration sensor which serve as a second means for determining absence or presence of a user's intention to open the door are positioned, respectively.
FIG. 22 is a functional block diagram briefly illustrating a configuration of a controller and functional modules included in a dish washer according to an embodiment of the present disclosure.
FIG. 23 is a flow chart showing a sequence of cycles performed in a dish washer according to an embodiment of the present disclosure.
FIGS. 24 to 26 are flow charts respectively showing steps of a method for controlling a dish washer according to an embodiment of the present disclosure.

### [Best Mode]

The above-mentioned purpose, features and advantages are described in detail below with reference to the attached drawings. Accordingly, a person skilled in the art in the technical field to which the present disclosure belongs will be able to easily implement the technical idea of the present disclosure. In describing the present disclosure, when it is determined that a detailed description of the known technology related to the present disclosure may unnecessarily obscure the gist of the present disclosure, the detailed description thereof is omitted. Hereinafter, preferred embodiments according to the present disclosure will be described in detail with reference to the attached drawings. In the drawings, identical reference numerals are used to indicate identical or similar components.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

Spatially relative terms, such as "beneath," "below," "lower," "under," "above," "upper," and the like, may be used herein for ease of explanation to describe one element or feature's relationship to another element or feature as illustrated in the figures. It will be understood that the spatially relative terms are intended to encompass different orientations of the device in use or in operation, in addition to the orientation depicted in the figures. For example, when the device in the drawings may be turned over, elements described as "below" or "beneath" or "under" other elements or features would then be oriented "above" the other elements or features. Thus, the example terms "below" and "under" may encompass both an orientation of above and below. The device may be otherwise oriented for example, rotated 90 degrees or at other orientations, and the spatially relative descriptors used herein should be interpreted accordingly.

As used herein, "A and/or B" means A, B or A and B, unless specifically stated otherwise. Expression such as "at least one of" when preceding a list of elements may modify the entirety of list of elements and may not modify the individual elements of the list. As used herein, "C to D" means C inclusive to D inclusive unless otherwise specified.

Hereinafter, the present disclosure will be described with reference to drawings showing a configuration according to an embodiment of the present disclosure.

### [Overall structure of dish washer]

Hereinafter, an overall structure of a dish washer 1 according to an embodiment of the present disclosure will be described in detail with reference to the attached drawings.

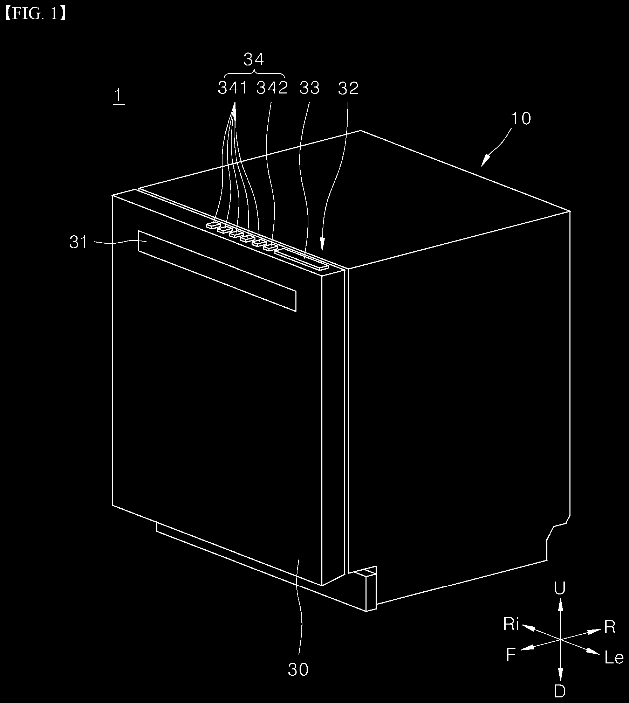

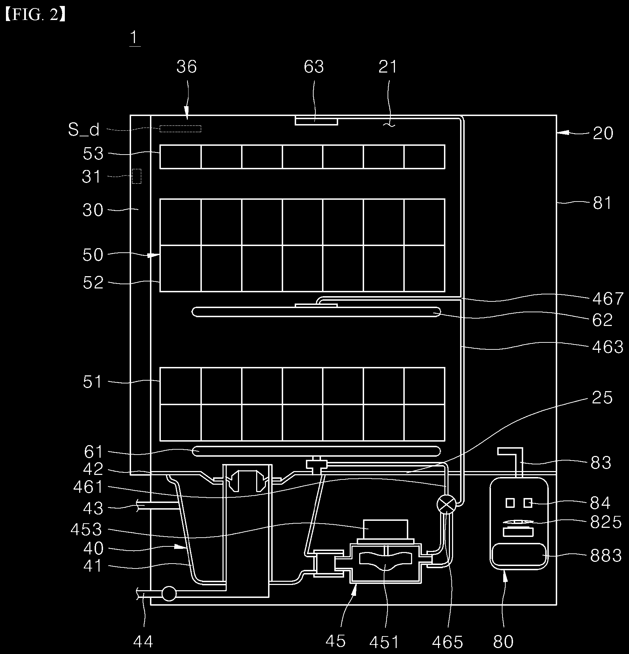

FIG. 1 is a front perspective view showing the dish washer 1 according to the present disclosure. FIG. 2 is a simplified cross-sectional view briefly showing an internal structure of the dish washer 1 according to the present disclosure.

As shown in FIG. 1 and FIG. 2, the dish washer 1 according to the present disclosure may include a casing 10 that constitutes an exterior appearance, a tub 20 installed in an inner space of the casing 10 and having a washing space 21 defined therein where the washing target is washed, wherein a front surface of the tub is open, a door 30 that opens/closes the open front surface of the tub 20, a driver 40 located under the tub 20 to supply, collect, circulate, and discharge the washing water for washing the washing target, a dish rack 50 removably provided in the inner washing space 21 of the tub 20 to receive therein the washing target, and a water sprayer installed adjacent to the dish rack 50 to spray the washing water for washing the washing target thereto.

In this regard, the washing target received in the dish rack 50 may be, for example, dishes such as bowls, plates, spoons, and chopsticks, and other cooking utensils. Hereinafter, unless otherwise specified, the washing target will be referred to as a dish.

The tub 20 may be formed in a box shape with an entirely open front surface, and have a configuration of a so-referred to as washing tub.

The washing space 21 may be defined inside the tub 20. The open front surface of the tub 20 may be opened/closing by the door 30.

The tub 20 may be formed via pressing of a metal plate resistant to high temperature and moisture, for example, a stainless steel plate.

Moreover, on an inner surface of the tub 20, a plurality of brackets may be disposed for the purpose of supporting and installing functional components such as the dish rack 50 and the water sprayer which will be described later thereon within the tub 20.

In one example, the driver 40 may include a sump 41 that stores therein washing water, a sump cover 42 that distinguishes the sump 41 from the tub 20, a water supply 43 that supplies washing water from an external source to the sump 41, a water discharger 44 that discharges the washing water of the sump 41 to an outside, and a washing pump 45 and a supply flow path 46 that supply the washing water of the sump 41 to the water sprayer. The sump cover 42 may be disposed at a top of the sump 41 and may serve to distinguish the tub 20 and the sump 41 from each other.

Moreover, the sump cover 42 may have a plurality of collecting holes defined therein for collecting washing water sprayed into the washing space 21 through the water sprayer into the sump 41.

That is, the washing water sprayed from the water sprayer toward the dish may fall down to a bottom of the washing space 21, and may be collected again through the sump cover 42 and into the sump 41.

The washing pump 45 may be disposed at one side of the sump 41 and may serve to pressurize the washing water and supply the pressurized washing water to the water sprayer.

One end of the washing pump 45 may be connected to the sump 41 and the other end thereof may be connected to the supply flow path 46. The washing pump 45 may be equipped with an impeller 451 and a motor 453. When power is supplied to the motor 453, the impeller 451 may rotate, and thus the washing water in the sump 41 may be pressurized, and then may be supplied to the water sprayer through the supply flow path 46.

Although not shown, a wash water heater may be provided in the washing pump 45 to heat the wash water supplied during a wash cycle or a heat rinse cycle.

In one example, the supply flow path 46 may serve to selectively supply the washing water supplied from the washing pump 45 to the water sprayer.

For example, the supply flow path 46 may include a first supply flow path 461 connected to a lower spraying arm 61, and a second supply flow path 463 connected to an upper spraying arm 62 and a top nozzle 63. The supply flow path 46 may be provided with a supply flow path switching valve 465 that selectively opens/closes the supply flow paths 461 and 463.

In this regard, the supply flow path switching valve 465 may be controlled so that the supply flow paths 461 and 463 are opened sequentially or simultaneously.

In one example, the water sprayer may be constructed to spray the washing water to the dishes stored in the dish rack 50.

More specifically, the water sprayer may include the lower spraying arm 61 located under the tub 20 to spray the washing water to a lower rack 51, the upper spraying arm 62 located between the lower rack 51 and an upper rack 52 to spray the washing water to the lower rack 51 and the upper rack 52, and the top nozzle 63 located on top of the tub 20 to spray the washing water to a top rack 53 or the upper rack 52.

In particular, the lower spraying arm 61 and the upper spraying arm 62 may be rotatably disposed in the washing space 21 of the tub 20 and may spray the washing water toward the dish of the dish rack 50 while being rotating.

The lower spraying arm 61 may be rotatably supported on a top of the sump cover 42 so as to spray the washing water toward the lower rack 51 while being rotating and being disposed under the lower rack 51.

Moreover, the upper spraying arm 62 may be rotatably supported by a spraying arm holder 467 so as to spray the washing water on the dish while being rotating and being disposed between the lower rack 51 and the upper rack 52.

In one example, although not shown, in order to increase washing efficiency, additional means for diverting the washing water sprayed from the lower spraying arm 61 into an upward direction (diverting in a U-direction) may be provided at a lower surface 25 of the tub 20.

A detailed configuration of the water sprayer has been already known in the art. Thus, a description of the specific configuration of the water sprayer will be omitted below.

The dish rack 50 for storing the dish therein may be disposed in the washing space 21.

The dish rack 50 may be constructed to extend or retract from or into the inner space of the tub 20 through the open front surface of the tub 20.

For example, in FIG. 2, an embodiment is shown in which the dish rack 50 includes the lower rack 51 located at a lower portion of the tub 20 to accommodate therein relatively large dishes, the upper rack 5 located on top of the lower rack 51 to accommodate therein medium-sized dishes, and the top rack 53 located at a top level of the tub 20 and capable of storing therein small dishes, etc. However, However, embodiments of present disclosure are not limited thereto. However, hereinafter, an example in which the dish washer 1 includes the three dish racks 50 as shown is described.

Each of the lower rack 51, the upper rack 52, and the top rack 53 may be constructed to extend or retract from or into the inner space of the tub 20 through the open front surface of the tub 20.

For this purpose, guide rails (not shown) may be respectively disposed on both opposing inner side surfaces constituting an inner surface of the tub 20. By way of example, the guide rails may include an upper rail, a lower rail, and a top rail.

Wheels may be disposed on a bottom of each of the lower rack 51, the upper rack 52, and the top rack 53. The user may extend the lower rack 51, the upper rack 52, and the top rack 53 from the inner space of the tub 20 through the open front surface of the tub 20 and may place the dishes thereon, or easily withdraw the dishes that have been washed out thereof.

The guide rail (not shown) may be embodied as a simple rail-type fixed guide rail to guide the extending or the retracting of the rack 50, or a telescopic guide rail capable of guiding the extending or the retracting of the rack 50 and at the same time, increasing an extension distance thereof as the rack 50 further extends from the inner space of the tub.

In one example, the door 30 is configured for opening/closing the open front surface of the tub 20 as described above.

A hinge (not shown) around which the door 30 is closed or opened may be provided at a bottom of the open front surface. Thus, the door 30 may pivot around the hinge as a pivot axis.

In this regard, a handle 31 for opening the door 30 and a control panel 32 for controlling an operation of the dish washer 1 may be disposed on an outer side surface of the door 30.

As shown, the control panel 32 may include a display 33 that visually displays information regarding a current operating status of the dish washer 1, etc., and a button unit 34 including a selection button through which a user's course selection manipulation is input and a power button through which a user's manipulation for turning the dish washer on and off is input.

In one example, a rear panel 30b constituting an inner side surface of the door 30 may constitute one surface of the tub 20 when the door 30 has been closed, and may constitute a seat surface on which the lower rack 51 of the dish rack 50 is supported when the door 30 is fully opened.

For this purpose, when the door 30 is fully opened downwardly, the rear panel 30b of the door 30 may constitute a horizontal plane extending in the same direction as a direction in which the guide rail (not shown) guiding the displacement of the lower rack 51 extends.

In one example, unlike a conventional handle, the handle 31 of the dish washer 1 according to the present disclosure may be configured to be at least partially accommodated in an inside of the door 30 when the handle is not in use, and to automatically extend in a protruding manner in a frontward direction from the door 30 when it is necessary to open and close the door 30.

In that the handle is configured to retract so as to be at least partially accommodated in the inside of the door 30 or extend in a protruding manner in a frontward direction from the door 30 out of the inside of the door 30, the handle 31 may be referred to as various names such as a pop-up handle, a retractable handle, an extendable handle, etc.

Hereinafter, the handle 31 configured to retract into or extend from the door 30 of the dish washer 1 according to one embodiment of the present disclosure will be referred to as the pop-up handle 31.

Although not shown, a detergent supply device for automatically supplying detergent into the inside of the tub 20 may be further installed on an inner side surface of the door 30.

Furthermore, a door position sensor 36 may be disposed on an outer top surface of the tub 20 and may be configured to detect whether the door 30 is in a closed or open state. For example, the door position sensor 36 may include a door position sensor S_d or a latch sensor that detects a position of a door latch (not shown).

In one example, a drying air supply 80 may be disposed under the tub 20 and may be configured to generate and supply high-temperature or low-temperature drying air to the washing space inside the tub 20.

As shown, the drying air supply 80 may be configured to include a filter member 883 for filtering outside air, a blower fan 825 for generating a drying air stream, a heater 84 for heating the drying air stream, and an air stream guide 83 disposed inside the tub 20 so as to guide the drying air stream.

A drying air supply hole may be defined in a lower surface of the tub 20 so that high-temperature drying air generated by the drying air supply 80 may be introduced into the inside of the tub 20 through the drying air supply hole.

Thus, the high-temperature drying air or low-temperature drying air may be supplied from the drying air supply 80 into the inside of the tub 20 during the drying cycle S5 such that the drying efficiency and sterilization effect on the dishes may be significantly improved compared to a conventional dish washer.

In one example, the dish washer may be configured such that the air current supplied to the inside of the tub 20 and moistened while drying the dishes may be discharged to the outside, and the discharge of the air current may be accomplished via partial opening of the door 30 or via a separate air discharge means (not shown).

### [Appearance and operation of pop-up handle]

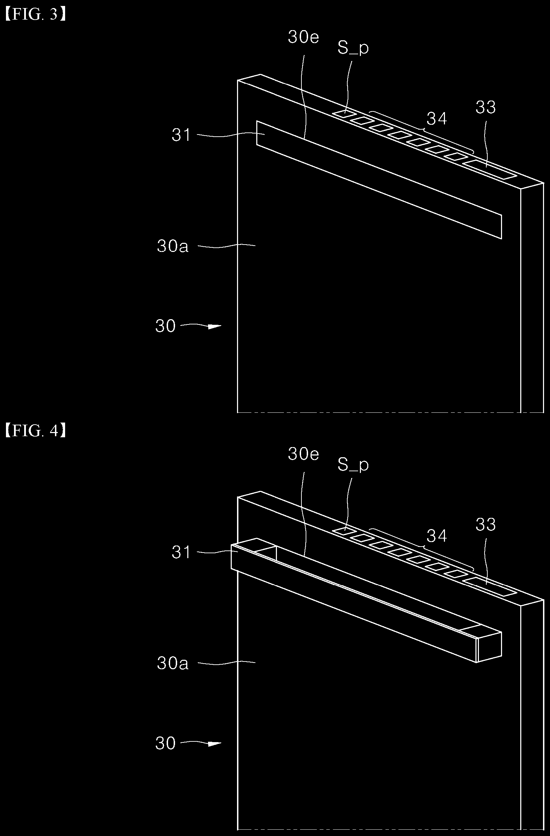

Hereinafter, with reference to FIGS. 3 to 5, the appearance and the operation of the pop-up handle 31 disposed at the door 30 of the dish washer 1 according to one embodiment of the present disclosure will be described in detail.

As described above, the door 30 of the dish washer 1 according to one embodiment of the present disclosure may be provided with the pop-up handle 31 that may be reciprocally movable.

In this regard, as described above, the door 30 may be configured to be pivotable around the hinge (not shown) connected to a lower end of the door.

In consideration of the position of the hinge, as shown in FIG. 3 and FIG. 4, the pop-up handle 31 may be positioned at a position close to a top surface of the door 30 where the user may easily grasp the handle, and may be disposed at the front panel 30a constituting the front surface of the door 30.

Furthermore, the pop-up handle 31 may extend along an extension direction of a front edge of the top surface of the door 30 and along a left-right direction so that the user may easily grasp the handle. The handle 31 may be formed to have an approximate 90 degrees-rotated U shape.

In order to extend or retract the pop-up handle 31, an elongate opening 30e extending in a left-right direction and having a shape corresponding to an appearance of the pop-up handle 31 may be defined in the front panel 30a of the door 30 and extend along the extension direction of the front edge of the top surface of the door 30, and have a depth along a front-rear (F-R) direction

The pop-up handle 31 may be configured to reciprocate along the forward and backward directions through the opening 30e of the front panel 30a under an operation of a handle driver 35 as described below.

More specifically, the pop-up handle 31 may be disposed to reciprocate between the most forward position and the most rearward position under the operation of the handle driver 35.

For convenience, the most forward position to which the pop-up handle 31 is displaced in a forward direction is defined as an extended position Pd. The most rearward position to which the pop-up handle 31 is displaced in a backward direction is defined as a retracted position Pa.

FIG. 3 illustrates a state where the pop-up handle 31 has been displaced to the most rearward position, that is, the retracted position Pa, and thus has been retracted into the inside of the door 30.

As shown, when the pop-up handle 31 has been displaced to the retracted position Pa, the pop-up handle 31 has been at least partially retracted into the inside of the door 30.

In this regard, preferably, the pop-up handle 31 may passing through an entirety of the opening 30e of the door 30 and be retracted into the inside of the door 30.

Furthermore, when the pop-up handle 31 has been displaced to the retracted position Pa, the pop-up handle 31 may be in a state where the pop-up handle 31 does not protrude from the front panel 30a of the door 30 in a frontward direction.

Furthermore, when the pop-up handle 31 has been displaced to the retracted position Pa, a front end surface of the pop-up handle 31 may be coplanar with a front surface of the front panel 30a of the door 30 so as to form a continuous surface.

That is, a state in which no step is formed between the front surface of the front panel 30a of the door 30 and the front end surface of the pop-up handle 31 may be formed when the pop-up handle 31 has been displaced to the retracted position Pa.

Thus, when the pop-up handle 31 has been displaced to the retracted position Pa, the opening 30e of the front panel 30a is entirely blocked, and at the same time, no step is formed between the front surface of the front panel 30a and the front end surface of the pop-up handle 31, such that the phenomenon in which foreign substances such as dusts accumulate on an convex portion of the door 30 or on the handle itself as in the conventional approach may be fundamentally prevented.

In one example, as described below, the front end surface of the pop-up handle 31 may be a front surface of a decoration panel 315 that is provided separately from a first handle body 311 that constitute the overall appearance of the pop-up handle 31.

In this regard, the decoration panel 315 may include a material having the same texture as that of the front panel 30a of the door 30.

Thus, the user may feel a sense of unity the decoration panel 315 and the front panel 30a of the door 30, and thus the aesthetic sensibility of the outer appearance of the door 30 may be improved and the aesthetics of the door which the user perceives may be improved.

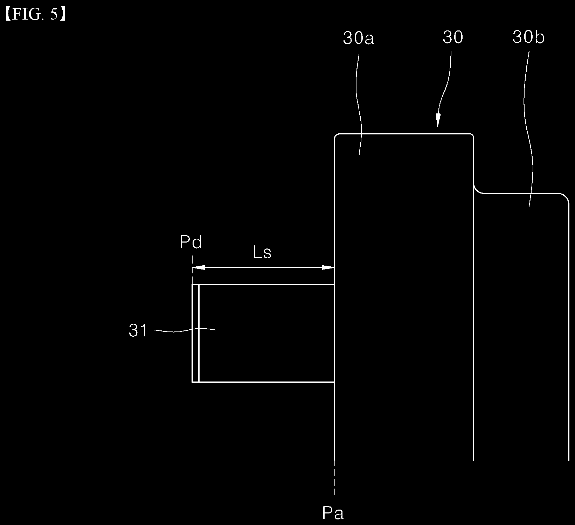

FIG. 4 and FIG. 5 illustrate a state in which the pop-up handle 31 has been displaced from the retracted position Pa to the extended position Pd as the most forward position.

As described above, the door 30 of the dish washer 1 should be opened and closed in order to store the dishes that need to be washed in the dish washer or to withdraw the dishes that have been washed out of the dish washer 1.

When the user's intention to open the door 30 is identified as being present at a time when opening/closing of the door 30 is required, the pop-up handle 31 may be automatically moved from the retracted position Pa to the extended position Pd under the operation of the handle driver 35.

For this purpose, the dish washer 1 according to an embodiment of the present disclosure may further be provided with a means for detecting the user's intention to open the door 30.

For example, the dish washer 1 according to an embodiment of the present disclosure may include a proximity sensor S_p as a first means for detecting absence or presence of a user's intention to open the door 30.

The proximity sensor S_p may be a sensor that may detect whether the user approached so as to be located within a specific detection range from the door 30.

For example, the proximity sensor S_p may include any one of a radar sensor, an image sensor, or an infrared sensor (IR) Sensor.

However, embodiments of the present disclosure are not limited thereto, and the proximity sensor S_p may be applied without limitation in terms of the type thereof as long as the proximity sensor S_p is a means that may identify proximity of the user to the door. The following description will be based on an example in which the radar sensor is applied as the proximity sensor S_p.

As shown in FIG. 3 and FIG. 4, the radar sensor as the proximity sensor S_p may be disposed on the control panel 32 and at a location close to the existing display 33 so as to easily identify the proximity of the user to an area in front of the door, and to facilitate modularization thereof with the existing display 33.

Furthermore, in order to distinguish between a user and a non-user such as a pet, the radar sensor functioning as the proximity sensor S_p may be disposed on the control panel 32 and at a location as close as possible to a center of the top surface of the door 30.

However, the dish washer 1 according to the present disclosure is not configured to immediately move the pop-up handle 31 even when the radar sensor recognizes that the user is located within a predetermined detection range from the door 30.

This is because there may be cases where the user simply passes by the dish washer 1 without any intention to open the door 30.

Therefore, according to the present disclosure, the dish washer 1 may be further configured to add a time condition to identify absence or presence of the intention to open the door 30 through the proximity sensor S_p such as the radar sensor.

That is, according to an embodiment of the present disclosure, when the dish washer 1 identifies that the user is present within a specific detection range from the door 30 through the radar sensor and continues to stay within the specific detection range for a specific time condition, the dish washer 1 may determine that the user has an intention to open the door 30.

In this regard, the specific detection range and the specific time condition may be set to vary depending on the environment in which the dish washer 1 is disposed and a physical condition of the user.

When the specific detection range condition and the specific time condition are satisfied, a controller 1 as described below is configured to initiate the operation of the handle driver 35 to move the pop-up handle 31 in the frontward direction from the retracted position Pa to the extended position Pd.

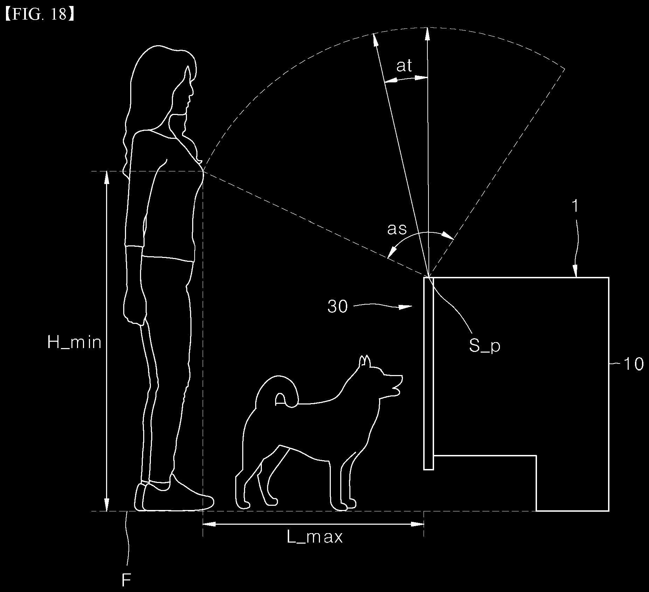

Details regarding the configuration for identifying absence or presence of the user's intention to open the door 30 using the proximity sensor S_p, etc., will be described below with reference to FIG. 18.

FIG. 4 and FIG. 5 illustrate the state in which the pop-up handle 31 has completed the forward movement to the extended position Pd.

When the pop-up handle 31 has completed its movement to the extended position Pd, the first handle body 311 of the pop-up handle 31 may be entirely exposed to the outside out of the door 30 and may be grasped by the user.

In this regard, a stroke Ls by which the pop-up handle 31 is displaced from the retracted position Pa to the extended position Pd may be in a range of 40 mm inclusive to 50 mm inclusive, preferably 45 mm.

The stroke Ls of the pop-up handle 31 is determined in consideration of that when the stroke Ls is too small, such as smaller than 40 mm, it is not easy for the user to grasp the handle, while when the stroke Ls is too large, such as larger than 50 mm, a size of the pop-up handle 31 in the forward and backward direction increases, thereby causing a problem in that the pop-up handle 31 does not retract entirely into the door 30.

However, the numerical value of the movement stroke Ls of the pop-up handle 31 is only an example and may be set to vary depending on the overall size of the dish washer 1 and the size in the forward and backward direction of the door 30.

In one example, as the pop-up handle 31 moves to the extended position Pd, the first handle body 311 of the pop-up handle 31 comes out of the opening 30e of the front panel 30a of the door 30 and is exposed to the outside out of the door 30. Accordingly, the opening 30e is not blocked with the first handle body 311.

However, when the pop-up handle 31 moves to the extended position Pd as described below, a second handle body 312 connected to the first handle body 311 moves in the frontward direction together therewith, so that the opening 30e of the front panel 30a is blocked with the second handle body 312.

Therefore, even when the pop-up handle 31 has been moved to the extended position Pd, the opening 30e of the front panel 30a may be maintained in a blocked state, so that foreign substances such as dusts may be effectively prevented from entering the inside of the door 30.

Furthermore, since the observation of the inside of the door 30 through the opening 30e of the front panel 30a blocked with the second handle body 312, the deterioration of the aesthetic sense for the user may be effectively prevented.

### [Detailed configuration of handle driver]

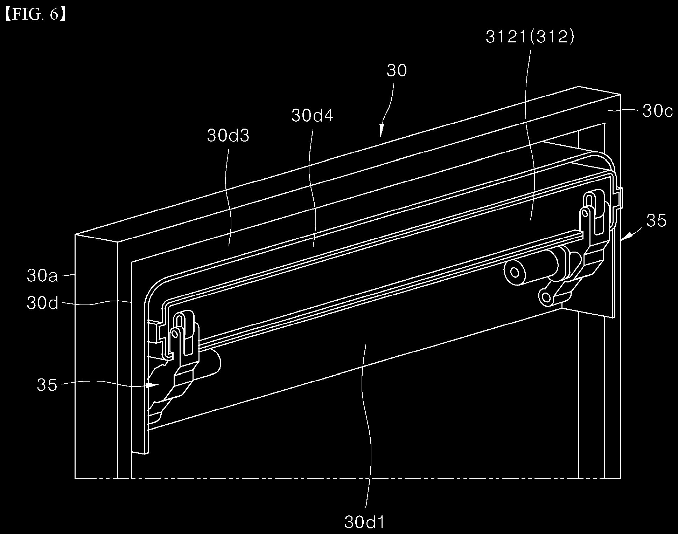

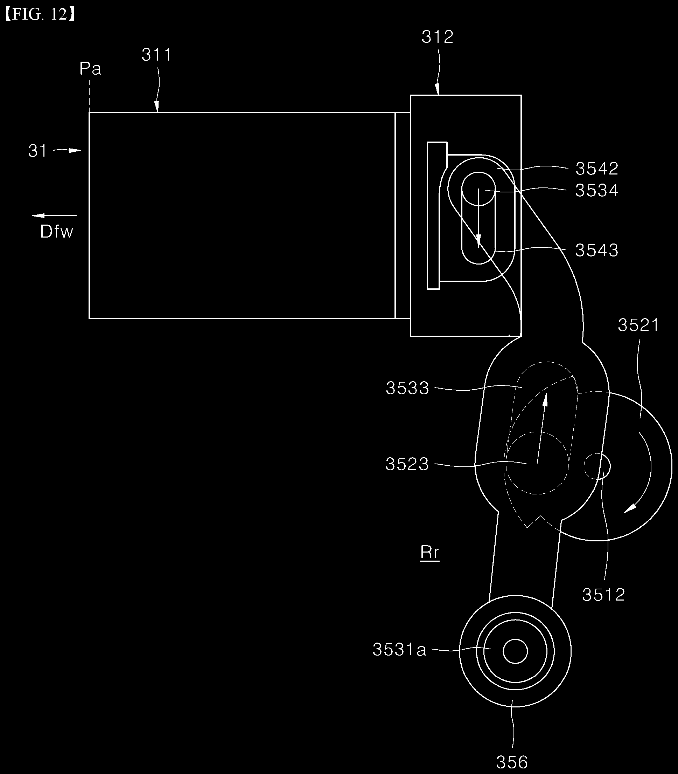

Hereinafter, referring to FIG. 6 to FIG. 13, the detailed configuration of the handle driver 35 that actuates the pop-up handle 31 so that the pop-up handle 31 moves back and forth between the extended position Pd and the retracted position Pa is described.

First, referring to FIG. 6, in consideration of a shape of each of the first handle body 311 and the second handle body 312 of the pop-up handle 31 that extends in an elongate manner in the left-right direction, a pair of handle drivers 35 may be disposed separately and respectively on a left end and a right end of the pop-up handle 31.

That is, the pair of handle drivers 35 may be separated from each other and spaced from each other along the left-right direction and may be respectively on a left end and a right end of the pop-up handle 31 so as to respectively transmit a driving force for moving the pop-up handle 31 to the left end and the right end of the pop-up handle 31 which are accommodated inside a handle housing 30d4.

In this way, the pair of handle drivers 35 are disposed in a state separated from each other and spaced form each other along the left-right direction, the driving force generated from each of the handle drivers 35 may be transmitted to each of the left and right ends of the pop-up handle 31.

Accordingly, since driving loads applied to the handle drivers 35 are distributed, the miniaturization of each of the handle drivers 35 may be achieved, and thus, the manufacturing cost may be reduced.

However, this is only an example. Alternatively, the pop-up handle 31 may be driven using only a single handle driver. Hereinafter, an embodiment in which the pair of handle drivers 35 are provided will be described. However, embodiments of present disclosure are not limited thereto.

As illustrated, the left handle driver 35 and the right handle driver 35 may have shapes symmetrical with each other and may be arranged symmetrically with each other around the pop-up handle 31, and may be fixedly installed on a handle frame 30d.

Therefore, the right and left handle drivers 35 may be configured to be identical with each other except for the fact that the left handle driver 35 and the right handle driver 35 have shapes symmetrical with each other and are arranged symmetrically with each other around the pop-up handle 31.

Therefore, the following description will be based on the handle driver 35 disposed at the left side. Unless otherwise described, the following content may be equally applied to the handle driver 35 disposed at the right side.

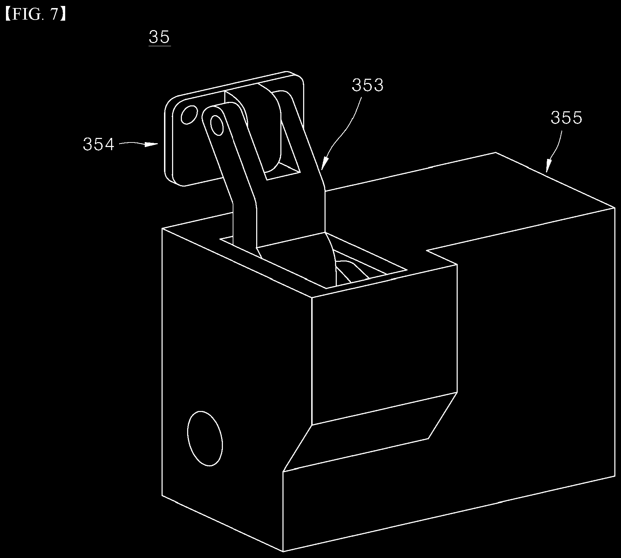

As shown in FIG. 7 to FIG. 9, the handle driver 35 that generates the driving force for the reciprocating movement of the pop-up handle 31 may be configured to include a driving motor 351 that receives power and generates a rotational driving force, a driving cam 352 that spins under the rotational driving force of the driving motor 351, a pivot link 353 that pivots around one end thereof in conjunction with the spin motion of the driving cam 352 so as to push or pull the pop-up handle 31, a link connector 354 that connects the pivot link 353 and the pop-up handle 31 to each other, and a housing 355 that accommodates therein the driving motor 351, the driving cam 352, and the pivot link 353.

The driving motor 351 is configured to receive power and generate a rotational driving force.

As described above, the pop-up handle 31 according to one embodiment of the present disclosure may be configured to repeatedly move forwards from the retracted position Pa toward the extended position Pd and move backwards from the extended position Pd toward the retracted position Pa and thus to reciprocate between the extended position Pd and the retracted position Pa.

In order to easily implement such reciprocating movement, the driving motor 351 constituting the handle driver 35 may be configured to generate a bidirectional rotation driving force.

Accordingly, the driving motor 351 applied to the handle driver 35 according to one embodiment of the present disclosure may be applied without limitation in terms of the type thereof as long as the driving motor 351 is capable of generating the bidirectional rotation driving force.

Hereinafter, among the bidirectional rotation driving (forces), the driving (driving force) in the direction in which an output shaft 3512 of the driving motor 351 rotates to move the pop-up handle 31 in the frontward direction toward the extended position Pd is referred to as forward direction rotation driving (forward direction rotation driving force), while the driving (driving force) in the direction in which the output shaft 3512 of the driving motor 351 rotates to move the pop-up handle 31 backwards toward the retracted position Pa is referred to as reverse direction rotation driving (or reverse direction rotation driving force).

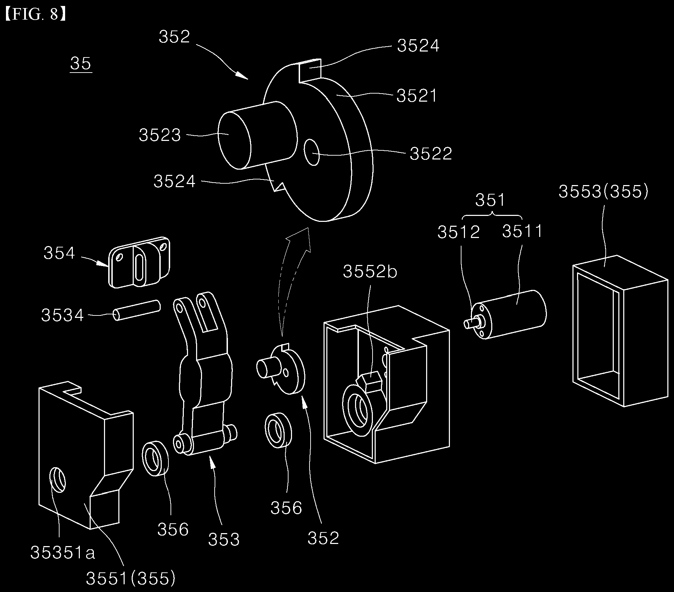

In one example, as shown in FIG. 8, a motor body 3511 of the driving motor 351 may be accommodated in an accommodation space formed between a second housing 3552 and a third housing 3553, and the output shaft 3512 of the driving motor 351 may extend thorough the second housing 3552 and be connected to the driving cam 352.

As described below, the output shaft 3512 of the driving motor 351 may be inserted into a shaft hole 3522 of the driving cam 352, and may be forcibly coupled to the shaft hole 3522.

Thus, the output shaft 3512 of the driving motor 351 may rotate integrally with the driving cam 352.

In one example, the driving cam 352 receives the rotation driving force from the output shaft 3512 of the driving motor 351 and transmits the received rotation driving force to the pivot link 353.

More specifically, when the driving cam 352 rotates in the forward direction in conjunction with the rotation of the output shaft 3512 of the driving motor 351, the driving cam 352 pressurizes the pivot link 353 so that the pivot link 353 pivots in the frontward direction. When the driving cam 352 rotates in the reverse direction in conjunction with the rotation of the output shaft 3512 of the driving motor 351, the driving cam 352 pressurizes the pivot link 353 so that the pivot link 353 pivots in the backward direction.

For this purpose, the driving cam 352 may be configured to include a cam body 3521 that spins under the rotation driving force transmitted from the output shaft 3512 of the driving motor 351, and a driving pin 3523 that is disposed on one side surface of the cam body 3521 and protrudes toward the pivot link 353.

The cam body 3521 may be provided in a form of a disk having an approximately uniform thickness, for example.

The shaft hole 3522 to which the output shaft 3512 of the driving motor 351 is forcibly inserted may extend through a center portion of the cam body 3521.

In order to easily implement integral rotation of the cam body 3521 and the motor shaft 3512 via the forcible coupling between the output shaft 3512 and the cam hole 3522, the output shaft 3512 and the shaft hole 3522 may be connected to each other via a spline coupling, etc.

In one example, the driving pin 3523 plays a role of transmitting the rotation driving force of the cam body 3521 to the pivot link 353.

As illustrated, the driving pin 3523 may be formed to protrude from one side surface facing the pivot link of the cam body 3521 toward the pivot link 353, and may be positioned at a position spaced apart from the shaft hole 3522 by a predetermined distance in a radial direction.

Therefore, when the cam body 3521 spins around the shaft hole 3522, the driving pin 3523 revolves around the shaft hole 3522.

The driving pin 3523 is connected to the pivot link 353 while being inserted into a guide groove 3533 of the pivot link 353 as described later.

Accordingly, while the driving pin 3523 revolves around the shaft hole of the cam body 3521, the driving pin 3523 pressurizes the pivot link 353 so that the pivot link 353 pivots in a frontward or backward direction.

In one example, a revolve range of the driving pin 3523 or a spin range of the cam body 3521 needs to be smaller than an extension length of the guide groove 3533 provided in the pivot link 353. This is because when the revolve range is larger than the extension length of the guide groove 3533, there is a possibility that the driving pin 3523 or the guide groove 3533 may be damaged.

A stopper protrusion 3524 acting as a means for limiting the revolve range of the driving pin 3523 or the spin range of the cam body 3521 may be disposed on an edge of the cam body 3521 and protrude along a radial direction thereof.

As illustrated, the stopper protrusion 3524 may be embodied as a predetermined step formed on the edge of the cam body 3521.

The stopper protrusion 3524 embodied as the step may be provided as a pair of stopper protrusions spaced apart from each other along a circumferential direction of the cam body which may limit the revolve range of the driving pin 3523 or the spin range of the cam body 3521 in both opposing directions.

In this way, the stopper protrusion 3524 may limit the revolve range of the driving pin 3523 or the spin range of the cam body 3521 to a circumferential range defined between the pair of stopper protrusions 3524.

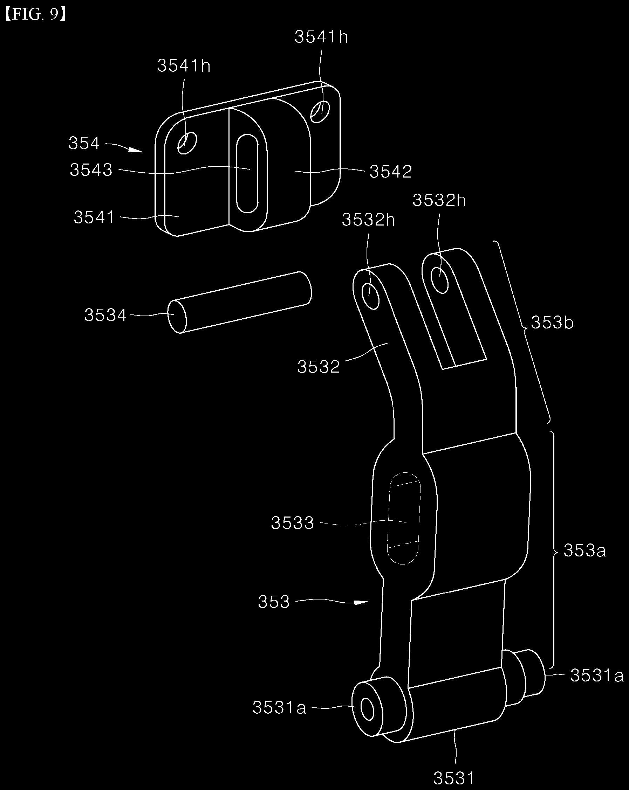

As shown in FIG. 9, a cam stopper 3552b corresponding to the pair of stopper protrusions 3524 may be provided inside the second housing 3552 that accommodates the driving cam 352.

In one example, the pivot link 353 receives the driving force from the driving pin 3523 of the driving cam 352 so as to push the pop-up handle 31 so that the pop-up handle 31 moves forwards or pull the pop-up handle 31 so that the pop-up handle 31 moves backwards.

As shown in FIG. 9, the pivot link 353 may be, for example, a bar-type link extending from a first end 3531 toward a second end 3532 thereof in a bar shape.

In this regard, the first end 3531 of the pivot link 353 as the bar-type link may be supported by the first housing 3551 and the second housing 3552 such that the pivot link only relatively rotates with respect to the first housing 3551 and the second housing 3552, that is, only pivots with respect to the first housing 3551 and the second housing 3552.

Accordingly, the pivot link 353 may pivot around the first end 3531 when the pressing force of the driving pin 3523 of the driving cam 352 is applied thereto.

For this purpose, a pair of shaft bosses 3531a that serve as a pivot center of an entirety of the pivot link 353 may be provided at both opposing sides of the first end 3531 of the pivot link 353, respectively.

The pair of shaft bosses 3531a may be formed to protrude toward the first housing 3551 and the second housing 3552 so as to have a predetermined protrusion height from one side surface and the other side surface of the first end 3531 of the pivot link 353, respectively.

A bushing 356 or a bearing may be fitted around each of the pair of shaft bosses 3531a to reduce friction. The pair of shaft bosses 3531a may be connected to the first housing 3551 and the second housing 3552, respectively, while each bushing 356 is fitted around each of the pair of shaft bosses 3531a.

Each of the first housing 3551 and the second housing 3552 may be formed to have each of cylindrical bushing receiving portions 3551a and 3552a into which each bushing 356 may be inserted.

The pivot link 353 may be formed to have the guide groove 3533 into which the driving pin 3523 of the driving cam 352 as described above is inserted.

As illustrated, the guide groove 3533 may be formed between the first end 3531 and the second end 3532, and may be defined in a first extension 353a of the pivot link 353 as described below.

The guide groove 3533 may linearly extend along a length direction of the first extension 353a. Movement of the driving pin 3523 may be guided along the extension direction of the guide groove 3533 so that the driving pin 3523 moves relative to the guide groove 3533 while being inserted into the guide groove 3533.

In one example, the second end 3532 of the pivot link 353 may be connected to the second handle body 312 of the pop-up handle 31 so as to be relatively pivotable with respect thereto, and may be configured to move the pop-up handle 31 forwards or backwards by pushing or pulling the second handle body 312 when the pivot link 353 pivots.

The second end 3532 of the pivot link 353 may be connected to the second handle body 312 via a connection pin 3534 so that the second end 3532 of the pivot link 353 may be pivotable relative to the second handle body 312.

In this regard, the link connector 354 may be further provided as a component for mutually connecting the second end 3532 of the pivot link 353 and the second handle body 312 to each other.

As illustrated, in one example, the link connector 354 may be configured to include a handle connection portion 3541 that is fastened to the second handle body 312 as described below, and a link connection portion 3542 that is indirectly connected to the second end 3532 via the connection pin 3534.

The handle connection portion 3541 may be formed in a flat shape so as to make surface contact with the second handle body 312 in order to secure a maximum contact area with the second handle body 312.

The handle connection portion 3541 may be formed to have a plurality of screw holes 3541h defined therein so that a connecting means such as a screw bolt may pass through each screw hole.

The link connection portion 3542 may be indirectly connected to the second end 3532 of the pivot link 353 via the above-described connection pin 3534.

For this purpose, a pin guide hole 3543 may be formed in the link connection portion 3542 and extend through the link connection portion along the left-right direction.

As illustrated, the pin guide hole 3543 may linearly extend along the vertical direction. The movement of the connection pin 3534 may be guided so that the connection pin moves relative to the pin guide hole 3543 in the vertical direction while being inserted into the pin guide hole 3543.

Therefore, when the pivot link 353 pivots, the connection pin 3534 coupled to the second end 3532 of the pivot link 353 moves along the pin guide hole 3543, thereby pushing the link connector 354 forwards or pulling the link connector backwards, thereby causing the pop-up handle 31 to move forwards or backwards.

In order to allow the connection pin 3534 to be connected in this way, left and right pin holes 3532h through which the connection pin 3534 passes may extend through the second end 3532 of the pivot link 353 along the left-right direction and may be arranged along the left-right direction.

Furthermore, the second end 3532 of the pivot link 353 may be formed in a branched form as illustrated in order to prevent interference with the link connection portion 3542 that moves relative to the second end 3532.

In one example, as described above, the pivot link 353 pivots around the first end 3531 to push or pull the link connector 354 and the second handle body 312 to generate the forward or backward movement stroke Ls of the pop-up handle 31.

In order to minimize a pivot amount of the pivot link 353 and maximize the frontward-backward movement stroke Ls of the pop-up handle 31, the second end 3532 of the pivot link 353 may extend in an inclined manner toward the second handle body 312 of the pop-up handle 31.

That is, as shown in FIG. 9, the pivot link 353 may include a first extension 353a that extends radially from the first end 3531, and a second extension 353b that extends in a bent manner toward the pop-up handle 31 and between the first extension 353a and the second end 3532.

In this way, the second extension 353b is formed to be bent or curved toward the pop-up handle 31, thereby greatly increasing a frontward-rearward stroke Ls by which the second handle body 312 of the pop-up handle 31 is pushed or pulled.

### [Movement of the pop-up handle under operation of handle driver.

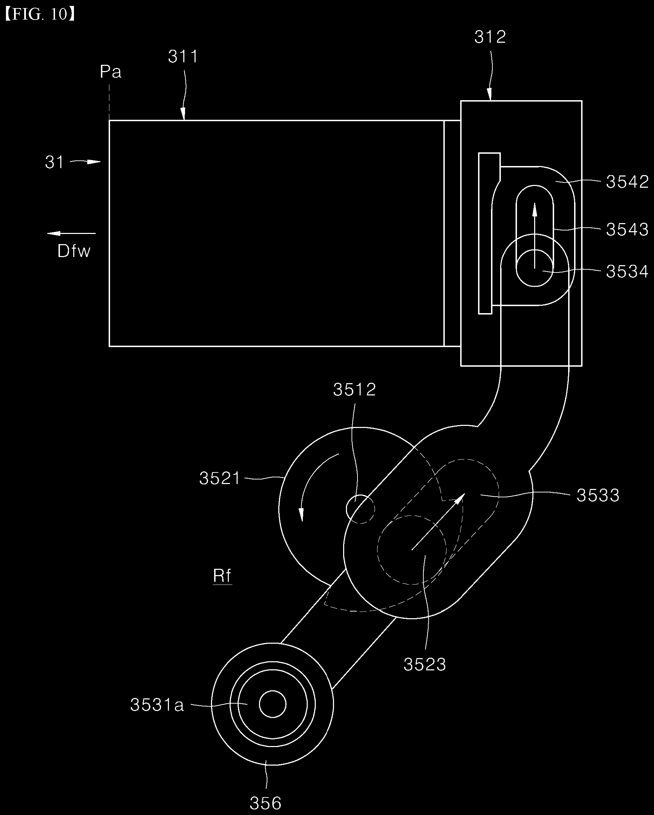

Referring to FIG. 10 to FIG. 13, a process in which the pop-up handle 31 moves forwards to the extended position Pd or moves backwards to the retracted position Pa under the operation of the handle driver 35 will be described below.

First, FIG. 10 illustrates a situation in which the pop-up handle 31 automatically moves forwards along the forward direction Dfw from the retracted position Pa toward the extended position Pd.

Referring to FIG. 10, when the pop-up handle 31 has been displaced to the retracted position Pa, the power is supplied to the driving motor 351, such that the operation of the driving motor 351 is initiated, and the driving motor 351 generates the forward direction rotation driving force.

Accordingly, the forward direction rotation of the output shaft 3512 of the driving motor 351 may be initiated, and the forward direction spin of the driving cam 352 forcibly connected to the output shaft 3512 may be initiated.

At this time, when the forward direction rotation is initiated, the output shaft 3512 and the driving cam 352 may start to rotate counterclockwise based on the illustrated state.

In one example, as the forward direction spin of the driving cam 352 is initiated, a forward direction revolve of the driving pin 3523 may be initiated.

As shown in FIG. 10, the driving pin 3523 which has been located at a lower end of the guide groove 3533 of the pivot link 353 may start to move to a top of the guide groove 3533.

As the driving pin 3523 revolves in the forward direction, the driving pin moves to the top from the bottom of the guide groove 3533, such that the driving pin 3523 presses the pivot link 353 such that the pivot link pivots forwards around the first end 3531 That is, based on the illustrated state, the pivot link 353 pivots counterclockwise around the first end 3531.

At this time, as the pivot link 353 pivots around the first end 3531, the second end 3532 of the pivot link 353 also pivots forwards, and the connection pin 3534 connected to the second end 3532 pivots forwards.

Accordingly, the driving pin 3523 which has been located at the bottom of the guide hole 3543 of the link connector 354 moves to the top of the guide hole 3543.

As the connection pin 3534 moves to the top from the bottom of the guide hole 3543, the connection pin 3534 presses the link connector 354 and the second handle body 312 to push forwards. That is, while the connection pin 3534 moves relative to the guide hole 3543 and along the guide hole 3543, a pressure force is applied to the link connector 354 to push the link connector 354 forwards.

In this way, the operation of the handle driver 35 is initiated, such that the driving cam 352 has completely rotated along a preset rotation range. Then, the power supply to the driving motor 351 may be cut off, and the forward movement of the pop-up handle 31 to the extended position Pd may be completed.

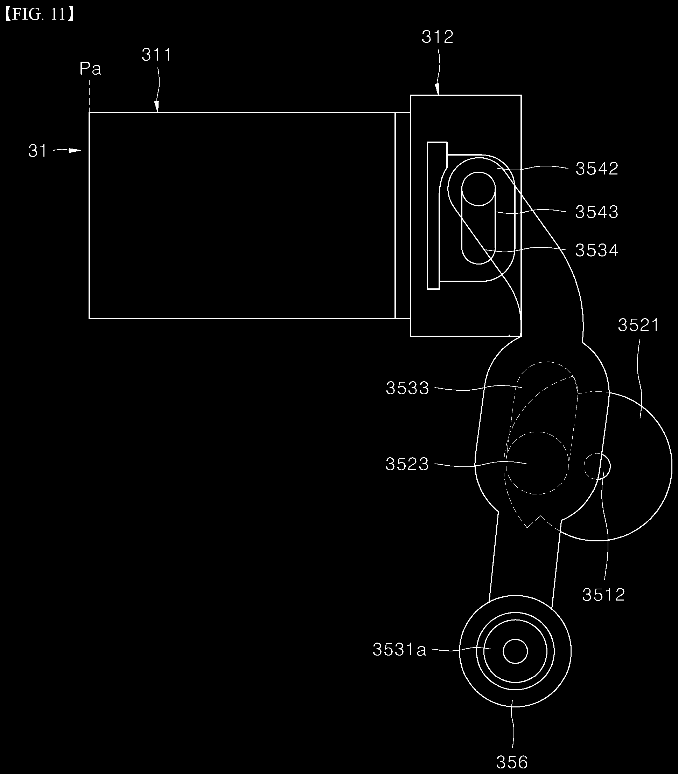

FIG. 11 shows the state in which the pop-up handle 31 has completed the forward movement to the extended position Pd.

When the forward movement of the pop-up handle 31 to the extended position Pd has been completed in this way, an entirety of the first handle body 311 may be exposed to the outside out of the door 30, and thus, the user may easily perform the action of opening or closing the door 30 while holding the first handle body 311.

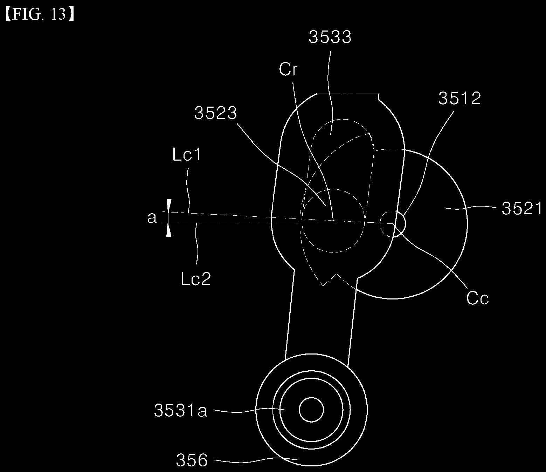

In this regard, as shown in FIG. 13, when the pop-up handle 31 has been displaced to the extended position Pd, the first extension 353a of the pivot link 353 has stood upright, and the driving pin 3523 of the driving cam 352 has been moved to the bottom of the guide groove 3533.

Therefore, as shown, a predetermined intersection angle a may be defined between a virtual first extension line Lc1 connecting a center Cr of the driving pin 3523 and a rotation center Cc of the shaft hole 3522 as a rotation center of the cam body 3521 and a virtual second extension line Lc2 which is parallel to a moving direction Drw/Dfw of the pop-up handle 31 and passes through the rotation center Cc of the shaft hole 3522 of the cam body 3521. However, the intersection angle a may be very small angle.

For example, the intersection angle a may be in a range of 0 degrees inclusive to 5 degrees inclusive.

The very small intersection angle a in a range of 5 degrees or smaller is defined in this way. Thus, a structure may be achieved in which the first handle body 311 is fixed at the extended position Pd without being removed from the extended position Pd even when a user's pressure to open or close the door 30 is applied to the first handle body 311 of the pop-up handle 31.

That is, a structure in which the pop-up handle 31 may be effectively fixed at the extended position Pd may be achieved by means of a position arrangement of the pivot link 353 and the driving cam 352 while a separate removal-prevention means or fixing means is not disposed at the pop-up handle 31 and the handle frame 30d as described below.

Thus, in the dish washer 1 according to one embodiment of the present disclosure, a structure of a combination of the pop-up handle 31, the handle driver 35, and the handle frame 30d may be simplified, and a manufacturing cost thereof may be significantly reduced.

FIG. 111 illustrates a situation in which the pop-up handle 31 automatically moves backwards along the backward direction Drw from the extended position Pd toward the retracted position Pa.

Referring to FIG. 11, the pop-up handle 31 has moved to the extended position Pd. Then, after a predetermined waiting time has elapsed, the power is supplied to the driving motor 351, the driving motor 351 starts operating, and the driving motor 351 generates the reverse rotation driving force. For example, the predetermined waiting time may be in a range of 2.5 seconds to 3.5 seconds.

Accordingly, the reverse rotation of the output shaft 3512 of the driving motor 351 starts, and the reverse spin of the driving cam 352 forcibly connected to the output shaft 3512 may start.

When the reverse rotation starts, the output shaft 3512 and the driving cam 352 may start to rotate clockwise based on the illustrated state.

Further, as the reverse spin of the driving cam 352 starts, the reverse revolve of the driving pin 3523 may start.

As shown in FIG. 11, the driving pin 3523 which has been positioned at the bottom of the guide groove 3533 of the pivot link 353 may start to move relative to the guide groove 3533 and to the top of the guide groove 3533.

As the driving pin 3523 revolves in the reverse direction, the driving pin moves relative to the guide groove 3533 and to the top from the bottom of the guide groove 3533, the driving pin 3523 presses the pivot link 353 to pivot in the rearward direction around the first end 3531. That is, based on the shown state, the pivot link 353 pivots clockwise around the first end 3531.

In this regard, as the pivot link 353 pivots around the first end 3531, the second end 3532 of the pivot link 353 also pivots in the rearward direction, and the connection pin 3534 connected to the second end 3532 pivots in the rearward direction.

Accordingly, the driving pin 3523 which has been located at the top of the guide hole 3543 of the link connector 354 moves relative to the guide hole 3543 and to the bottom of the guide hole 3543.

As the connection pin 3534 moves relative to the guide hole 3543 and from the top to the bottom of the guide hole 3543, the connection pin 3534 applies the pressure the link connector 354 to pull the link connector 354 in the rearward direction. That is, while the connection pin 3534 moves relative to and along the guide hole 3543, a pressure force is applied to the link connector 354 to pull the link connector 354 in the rearward direction.

In this way, the operation of the handle driver 35 has been initiated, and then, the driving cam 352 has completed the reverse pivot motion thereof along the preset rotation range. Then, the power supply to the driving motor 351 may be cut off, and the backward movement of the pop-up handle 31 to the retracted position Pa may have been completed.

### [Guide of linear movement of pop-up handle.

As described above, the pop-up handle 31 is configured to move forwards or backwards under the forward direction driving force or the reverse direction driving force of the handle driver 35.

However, as described above, the pop-up handle 31 may be configured to move horizontally or linearly along the forward direction Dfw or the backward direction Drw.

A means for implementing the horizontal or linear movement may be provided in the pop-up handle 31 and the handle frame 30d in which the pop-up handle 31 is accommodated.

As described above, the pop-up handle 31 may be configured to include the first handle body 311 that is exposed to the outside out of the door 30 and can be gripped by the user when the handle has been moved to the extended position Pd, and the second handle body 312 that is connected to a rear end of the first handle body 311 and is disposed inside the door 30 when the handle has been moved to the extended position Pd.

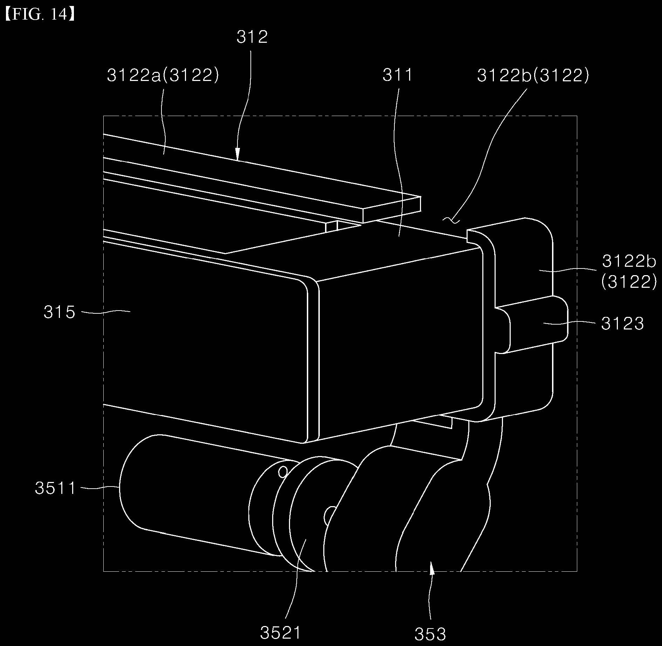

As illustrated in FIG. 14, the second handle body 312 may include a plate-shaped panel 3121 that serves to screen the opening 30e formed in the front panel 30a of the door 30 when the pop-up handle 31 has been moved to the extended position Pd, and an edge rib 3122 that extends along an edge of the panel 3121 and extends rearwardly so as to be away from the first handle body 311.

As described above, the link connector 354 of the handle driver 35 may be attached to a rear surface of the panel 3121 constituting the second handle body 312.

That is, the driving force of the handle driver 35 may be transmitted to the panel 3121 of the second handle body 312 via the link connector 354, and may be transmitted to the first handle body 311 via the panel 3121.

The edge rib 3122 extends along the edge of the panel 3121 and serves to reinforce rigidity of the panel 3121 and prevent the pop-up handle 31 from being removed from the door 30 when the handle is pulled by the user.

In order to perform the removal prevention function, the edge rib 3122 may be formed to have a width in the vertical direction and a width in the left-right direction larger than those of each of the opening 30e of the front panel 30a of the door 30 and an opening 30d2 of a handle frame 30d described later.

Due to the size of the edge rib 3122, when the first handle body 311 is pulled, a front surface of the edge rib 3122 may collide with an inner surface of the handle frame 30d, thereby preventing the first handle body 311 and the second handle body 312 from being removed from the door.

In one example, a vertical extension 3122b of the edge rib 3122 may have a guide protrusion 3123 that protrudes so as to be away from the edge rib 3122.

As shown in FIG. 14, the guide protrusion 3123 may have a shape having a constant thickness in the vertical direction and extending in an elongate manner along a direction parallel to the forward direction Dfw or the backward direction Drw of the pop-up handle 31.

The guide protrusion 3123 may be inserted into a rail groove 30d45 of the handle housing 30d4 described below. As the guide protrusion 3123 moves along the rail groove 30d45, the first handle body 311 and the second handle body 312 move horizontally or linearly.

Therefore, a combination of the guide protrusion 3123 of the second handle body 312 and the rail groove 30d45 of the handle housing 30d4 may act as a first means for implementing the horizontal or linear movement of the pop-up handle 31.

FIG. 14 shows a configuration in which only a left portion of the edge rib 3122 is provided with the guide protrusion 3123. However, embodiments of the present disclosure are not limited thereto. A right portion of the edge rib 3122 opposite to the left portion thereof may also be provided with the guide protrusion 3123.

Furthermore, as shown in FIG. 14, the horizontal extension 3122a of the second handle body 312 may have a notch 3122c defined therein whose a left-right width is maintained to be constant.

A protruding surface portion 30d46 of the handle housing 30d4 described later may be inserted into the notch 3122c.

A left-right width of the protruding surface portion 30d46 may be maintained to be constant in a corresponding manner to a shape of the notch 3122c.

When the first handle body 311 and the second handle body 312 have been accommodated in the handle housing 30d4, the protruding surface portion 30d46 may be inserted into the notch 3122c. Therefore, when the pop-up handle 31 moves, the notch 3122c moves along the protruding surface portion 30d46, such that the first handle body 311 and the second handle body 312 move horizontally or linearly.

Therefore, a combination of the notch 3122c of the second handle body 312 and the protruding surface portion 30d46 of the handle housing 30d4 may act as a second means for implementing the horizontal or linear movement of the pop-up handle 31.

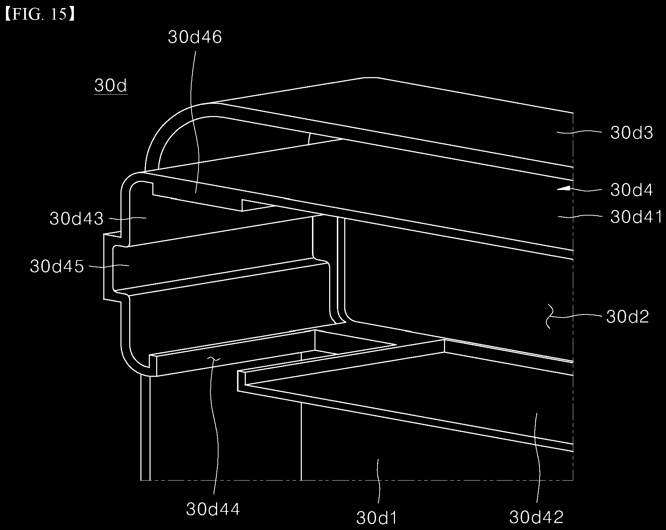

FIG. 15 illustrates the handle frame 30d including the handle housing 30d4 in which the first handle body 311 and the second handle body 312 are accommodated.

The handle frame 30d supports the aforementioned handle driver 35 attached thereto and receives therein and supports the pop-up handle 31 so as to be movable therein.

The handle frame 30d may include a panel portion 30d1 and an outer wall 30d3 that serve as a support surface or an attachment surface to support the handle driver 35.

The panel portion 30d1 and the outer wall 30d3 of the handle frame 30d may be attached to an inner surface of the front panel 30a of the door 30.

In one example, the handle frame 30d may further include the handle housing 30d4 to accommodate therein and support the pop-up handle 31 so as to be movable therein.

As illustrated, the handle housing 30d4 may be provided in a box shape with open front and rear surfaces so that the first handle body 311 and the second handle body 312 may be entirely accommodated in the handle housing in a state where the pop-up handle 31 has been moved to the retracted position Pa.

The open front surface of the handle housing 30d4 may act as the opening 30d2 through which the first handle body 311 extends or retracts.

The opening 30d2 of the handle housing 30d4 may be formed at a position corresponding to a position of the opening 30e of the front panel 30a of the door 30 and may have a corresponding size to a size of the opening 30e.

The handle housing 30d4 may be provided with the rail groove 30d45 and the protruding surface portion 30d46, each serving as the means for implementing the horizontal or linear movement of the pop-up handle 31 as described above.

The rail groove 30d45 may be formed in each of a left side surface and a right side surface of the handle housing 30d4, and may be formed by partially protruding each of the left side and right side surfaces thereof toward the outer wall 30d3.

The protruding surface portion 30d46 may be formed on an upper surface of the handle housing 30d4, and may be formed by protruding a portion of the upper surface thereof downwards.

In one example, as illustrated, a cut-away 30d44 may be defined in a lower surface 30d42 of the handle housing 30d4 to provide a movement path of the pivot link 353 of the handle driver 35.

### [Detailed structure of pop-up handle]

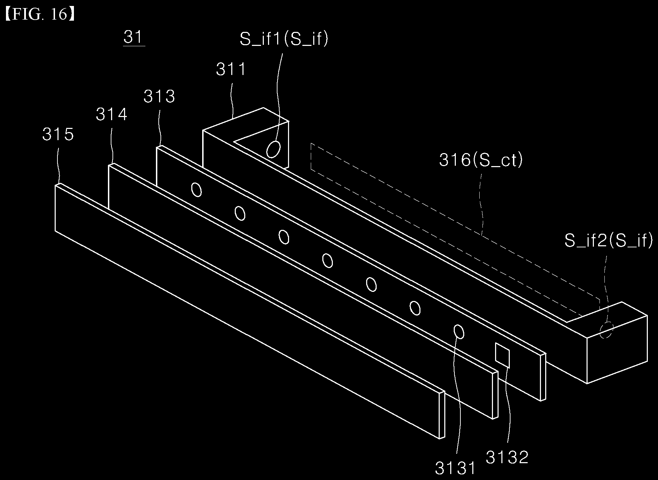

FIG. 16 illustrates a detailed structure of the pop-up handle 31 disposed in front of the first handle body 311 as described above.

Referring to FIG. 16, the pop-up handle 31 provided in the dish washer 1 according to one embodiment of the present disclosure may further include a handle substrate 313 that is disposed on a front surface of the first handle body 311 and has at least one light-source element 3131 mounted thereon, a light-guide plate 314 that is disposed in front of the handle substrate 313 and diffuses visible light generated from the light-source element 3131, and the decoration panel 315 that is disposed in front of the light-guide plate 314.

The light-source element 3131 generates visible light or another type of light when the pop-up handle 31 moves, thereby visually notifying the user that the pop-up handle 31 is operating normally.

The light-source element 3131 may be applied without limitation in terms of the type thereof as the light-source element 3131 may receive power and generate predetermined visible light. In one example, the light-source element 3131 may be an LED (light emitting diode) element.

The following description will be based on an example in which the LED element is applied as the light-source element 3131. However, embodiments of the present disclosure are not limited thereto.

FIG. 16 illustrates a configuration in which a total of 7 LED elements are mounted on the handle substrate 313. However, embodiments of the present disclosure are not limited thereto, and the number of LED elements may be increased or decreased depending on a size and a shape of the first handle body 311.

In one example, the light-guide plate 314 serves to diffuse the visible light generated from the light-source element 3131.

More specifically, the visible light generated from the light-source element 3131 may be introduced into the light-guide plate 314 through a rear surface of the light-guide plate 314. Then, the visible light received inside the light-guide plate 314 may be spread therein such that the visible light diffuses toward an edge of the light-guide plate 314.

In this regard, the decoration panel 315 disposed in front of the light-guide plate 314 may be surface-treated to have the same texture as that of the front panel 30a of the door 30 as described above.

Therefore, the visible light introduced into the light-guide plate 314 cannot pass through the decoration panel 315 and may be projected to the outside through the edge of the light-guide plate 314.

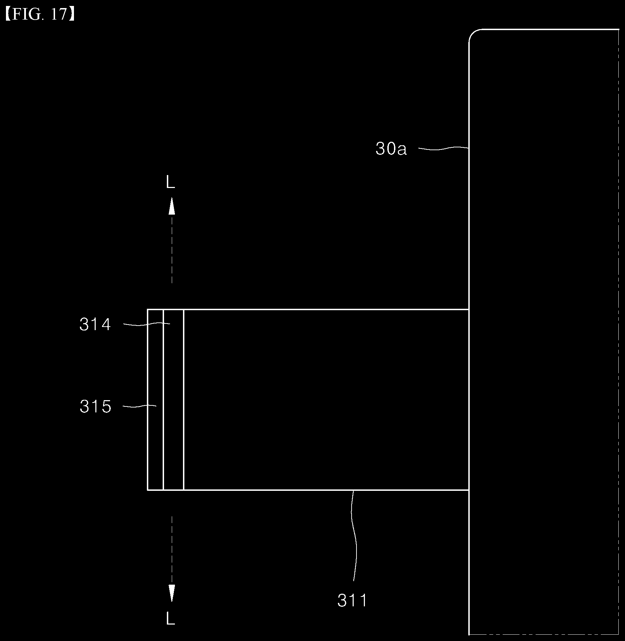

In order to project the visible light, the edge of the light-guide plate 314 may be exposed to the outside, as shown in FIG. 17.

That is, the light-guide plate 314 may be positioned so as to be sandwiched between the decoration panel 315 and the front surface of the first handle body 311, while the edge of the light-guide plate 314 may not be covered with the decoration panel 315 and the front surface of the first handle body 311.

Therefore, as illustrated, the light generated from the light-source element 3131 may travel through the inside of the light-guide plate 314 and then through the edge of the light-guide plate 314 and then may be effectively projected to the outside. Thus, the user may effectively identify an operating state of the pop-up handle 31 based on the optical light projected through the edge of the light-guide plate 314. In order that information indicating that the pop-up handle 31 is operating normally or that the operation of the pop-up handle will soon commence may be effectively conveyed to the user, the power may be supplied to the light-source element 3131 before the operation of the handle driver 35 commences or at the same time as a time when the operation of the handle driver 35 commences, so that the visible light may be irradiated to the outside out of the pop-up handle 31, as described below.

Furthermore, since the visible light is projected only through the edge of the light-guide plate 314, a lighting effect similar to indirect lighting may be achieved, thereby improving aesthetic sensibility for the user.

In one example, the pop-up handle 31 of the present disclosure is configured to automatically move forwards and automatically move backwards according to the operation of the handle driver 35.

Therefore, during the automatic backward movement of the pop-up handle 31, there is a possibility that the user's hand or an object may be caught into between the first handle body 311 and the door 30, and a means for warning and preventing such "hand being caught" to the user may be provided.

A vibration element 3132 as one of the means for warning such "hand being caught" may be provided in the pop-up handle 31.

For example, the vibration element 3132 may be mounted on the handle substrate 313 and may be configured to generate a haptic vibration in the pop-up handle 31 when the "hand being caught" is detected.

As shown in FIG. 16, the vibration element 3132 may be mounted on the handle substrate 313.

In this regard, either a piezo element or a haptic motor may be selected as the vibration element 3132 that may generate the haptic vibration and may be effectively mounted on the handle substrate 313.

In one example, the pop-up handle 31 may further be provided with a means for detecting the "hand being caught."

The means for detecting the "hand being caught" may be referred to as a first safety sensor S_sf1 and a second safety sensor S_sf2.

The first safety sensor S_sf1 detects whether the user's hand is caught with into between the first handle body 311 and the door 30.

In one example, the first safety sensor S_sf1 may include either a touch sensor S_t or an infrared sensor S_if.

The touch sensor S_t may be a capacitive touch sensor. In this case, a conductive sheet 316 constituting the capacitive touch sensor may be disposed on a rear surface of the first handle body 311 facing the door 30 so that contact of the user's finger therewith may be effectively detected by the sensor.

The infrared sensor S_if may be configured to project infrared rays from a transmitter S_if1 toward a receiver S_if2 and identify presence of the user's finger between the transmitter S_if1 and the receiver S_if2 based on whether the infrared rays are received by the receiver S_if2. To this end, as illustrated in FIG. 16, the transmitter S_if1 and the receiver S_if2 may be separately and respectively disposed at both opposing ends of the first handle body 311.

However, the positions of the transmitter S_if1 and receiver S_if2 are only examples, and the transmitter S_if1 and receiver S_if2 may be installed in other positions than the positions on the first handle body 311.

The second safety sensor S_sf2 detects whether an object other than the user's hand is located between the pop-up handle 31 and the door 30.

For example, the second safety sensor S_sf2 may include one of a strain sensor that detects whether the pop-up handle 31 or the handle driver 35 is deformed when the pop-up handle 31 moves backwards, or a current sensor that detects an overload of the driving motor 351 when the pop-up handle 31 moves backwards.

Although not shown, the strain sensor may be attached to the first handle body 311 or the second handle body 312 constituting the pop-up handle 31, or may be attached to the pivot link 353 of the handle driver 35.

Furthermore, although not shown, the current sensor may be provided in a power supply 48 as described below and configured to detect a current value supplied to the driving motor 351 through the power supply 48.

### [Means for detecting user's intent to open door]

As described above, the dish washer 1 according to one embodiment of the present disclosure may further include means for detecting a user's intent to open the door 30.

For example, the means for detecting the user's intent to open the door 30 may be the proximity sensor S_p and a knock-on sensor S_n.

First, FIG. 18 discloses a configuration for detecting the user's intent to open the door 30 using a single radar sensor as the proximity sensor S_p.

As known in the art, the radar sensor may transmit the electromagnetic waves from a sensing surface S_p1 thereof and may receive the electromagnetic waves reflected from the user or the object and may analyze the received electromagnetic waves and may perform a function of detecting the presence of the user or the object within a detection area as, a distance to the user or the object, and a moving speed of the user or the object based on the analysis result.

As illustrated, the detection area as of the radar sensor applied to the present disclosure may have an angular range of about 100 degrees along the frontward-backward direction and about 100 degrees along the left-right direction around the sensing surface S_p1.

In this regard, as described above, the radar sensor functioning as the proximity sensor S_p may be configured to be disposed at a position as close as possible to a center of a top surface of the front panel 30a of the door 30 defining the inside of the door 30 so as to easily identify whether the user is approaching an area in front of the door 30 and to distinguish between the user and a non-user such as a pet from each other.

At a position corresponding to the position where the radar sensor is disposed, a sensor hole 30a1 through which electromagnetic waves of the radar sensor may enter and exit may extend through the top surface of the front panel 30a. The sensor hole 30a1 may be closed with a glass panel 30a2.

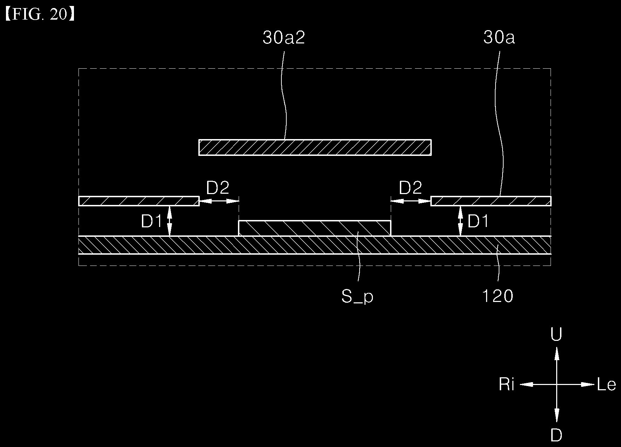

In this regard, in order to minimize interference with the detection area as of the radar sensor, each of predetermined left and right second clearances D2 extending in the left-right direction should be secured between the radar sensor S_p and the front panel 30a in an area of the sensor hole 30a1, as shown in FIG. 20. Further, each of predetermined first left and right clearance D1 extending in the vertical direction should be secured between the sensor substrate 120 on which the radar sensor is mounted and the front panel 30a, as shown in FIG. 20.

For example, a size of each of the first clearance D1 and the second clearance D2 may be set to be 5 mm or greater.

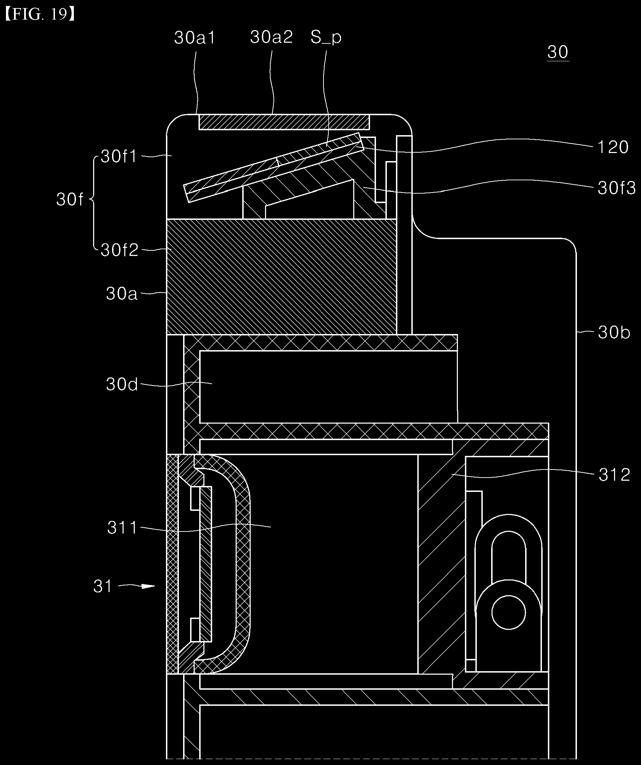

In one example, as shown in FIG. 19, the radar sensor S_p is disposed inside the door 30 and at a position closer to the top surface of the front panel 30a of the door 30, such that the sensing surface S_p1 of the radar sensor may generally face upwardly of the door 30.

Furthermore, the sensing surface S_p1 of the radar sensor may be oriented in a tilted manner at a predetermined angle in the frontward direction of door 30.

Therefore, the sensing surface S_p1 of the radar sensor may be oriented in a state facing in the frontward and upward direction of the door 30.

In this way, the sensing surface S_p1 of the radar sensor is oriented in a state facing in the frontward and upward direction of the door 30 rather than in the frontward and downward direction of door 30, the detection area as of the radar sensor may be formed in a tilted manner so as to face in the frontward and upward direction of the door 30.

More specifically, referring to FIG. 19, a substrate frame 30f to support the aforementioned control panel 32 and a main substrate 110 constituting the control panel 32 may be disposed between the front panel 30a and the rear panel 30b and in a upper end of an inner space of the door 30.

As illustrated, the substrate frame 30f may be disposed on top of the handle frame 30d and may being supported on the handle frame 30d.

In this regard, as illustrated, the substrate frame 30f may be provided as a combination of upper and lower portions stacked along the vertical direction, and may be composed of a first frame 30f1 constituting the upper portion and a second frame 30f2 constituting the lower portion.

As illustrated, a tilting holder 30f3 for supporting the radar sensor in the tilted state may be disposed on an inner bottom surface of the first frame 30f1 constituting the upper portion and may be integrally or separately formed with or from the first frame 30f1.

The radar sensor may be mounted on the main substrate 110, or may be mounted on the sensor substrate 120 provided separately from the main substrate 110 and adjacent to the main substrate 110, and may be supported on the tilting holder 30f3 as illustrated.

In this way, the sensing surface S_p1 of the radar sensor is disposed on the tilting holder 30f3 in a tilted manner so that the sensing surface faces in the frontward and upward direction of the door 30. Thus, even when an object that cannot be expected to use the dish washer 1, such as a pet or an infant with a height smaller than at least a height of the dish washer 1, approaches the area in front of the door 30, the radar sensor may be configured not to detect the object such as the pet or the infant. Accordingly, the pop-up handle 31 may be prevented from operating meaninglessly upon detecting the pet or the infant, and thus power loss may be minimized.

In this regard, the tilting angle at of the sensing surface S_p1 of the radar sensor with respect to the vertical direction may be, for example, in a range of 25 degrees inclusive to 35 degrees inclusive, and preferably 30 degrees.

However, the tilting angle at of the sensing surface S_p1 of the radar sensor provided in the present disclosure with respect to the vertical direction may be adjusted according to the physical condition of the user who is expected to use the dish washer 1.

For example, when the tilting angle at of the sensing surface S_p1 of the radar sensor with respect to the vertical direction is set to 30 degrees, a minimum vertical detection height H_min of the radar sensor may be in a range of 100 cm inclusive to 110 cm inclusive, preferably 105 cm, and a maximum detection distance L_max based on the horizontal direction may be in a range of 75 cm inclusive to 85 cm inclusive, preferably 80 cm.

That is, when the tilting angle at is set to 30 degrees, a user with a height of 105 cm or larger may be recognized as approaching the door when he or she enters the detection range within 80 cm from the radar sensor based on the horizontal direction.

Alternatively, for example, when the tilt angle at is set to 15 degrees, a user with a height of 127 cm or more may be recognized as approaching to the door when he or she enters the detection range within 50 cm of the radar sensor in the horizontal direction.

In this regard, the tilting angle at may be changed by adjusting the inclination angle of the aforementioned tilting holder 30f3.

In this way, the dish washer 1 according to an embodiment of the present disclosure is configured so that the tilting angle at of the sensing surface S_p1 of the radar sensor may be adjusted. Thus, the vertical minimum detection height H_min of the detection range and the horizontal maximum detection distance L_max of the detection range that can be detected by a single radar sensor and may be easily changed and set.

However, the dish washer 1 according to the present disclosure is not configured to immediately move the pop-up handle 31 even when the radar sensor recognizes that the user is located within a predetermined distance range from the door 30.

This is because, for example, a situation in which while the user simply passes by the dish washer 1 without the intention of opening the door 30, the user approaching the door is detected by the proximity sensor S_p may occur.

Therefore, according to the present disclosure, the dish washer 1 may be further configured to add a time condition to identify absence or presence of the intention to open the door 30 using the proximity sensor S_p such as the radar sensor.

That is, according to an embodiment of the present disclosure, when the dish washer 1 identifies that the user is present within a set distance range from the door 30 using the radar sensor and continues to stay within the set distance range for a set time condition, the dish washer 1 may determine that the user has the intention to open the door 30.

In this regard, the set time condition may be in a range of 0.9 seconds inclusive to 1.1 seconds inclusive, preferably 1 second.

When the detection range condition and the time condition set in this way are satisfied, as described below, the controller 100 may be configured to initiate the operation of the handle driver 35 to move the pop-up handle 31 forwards from the retracted position Pa to the extended position Pd before the washing course starts or after the washing course has been completed.

However, when the door 30 is opened while the dish washer 1 is performing the washing course, there is a very high possibility that the washing water will leak from the tub 20 or the user will be burned by the high-temperature washing water or the high-temperature airflow.

That is, while the washing cycle S2 is in progress using high-temperature washing water inside the tub 20, or the heating and rinsing cycle S4 is in progress using high-temperature washing water inside the tub 20, or the drying cycle S5 of drying the dishes is in progress using high-temperature airflow inside the tub 20, the door 30 may be opened momentarily, such that there is a very high possibility that the user will be burned by the high-temperature washing water or high-temperature airflow.

However, in some cases, even when the washing course is in progress, a situation may arise where the washing course in progress should be temporarily stopped and the dishes should be added to the inside of the tub 20 or some of the dishes should be withdrawn from the inside of the tub 20.

To this end, a knock-on sensor S_n may be provided as an additional means for detecting absence or presence of the user's intention to open the door 30 while the washing course is in progress.

When the user knocks on the door 30 with the intention of opening the door 30, the knock-on sensor S_n detects the knock-on, and transmits an output signal corresponding to the detected knock-on to the controller 100 described below.

As described below, the controller 100 may be configured to determine absence or presence of the user's intention to open the door based on a vibration signal received as the output signal from the knock-on sensor S_n.

The knock-on sensor S_n may be a vibration sensor to effectively detect the user's knock-on input, and may be configured to include a first vibration sensor S_n1 and a second vibration sensor S_n2 which are positioned at different locations.

For example, a combination of the first vibration sensor S_n1 and the second vibration sensor S_n2 may act as a single-axis directional vibration detection sensor that may detect a single-axis directional vibration component among three-axes directional vibration components. the first vibration sensor S_n1 and the second vibration sensor S_n2 may be configured to have the same appearance and size. The knock-on sensor S_n may be composed of the two vibration sensors having the same appearance and size, the manufacturing cost and assembly cost may be reduced.

However, the positions at which the first vibration sensor S_n1 and the second vibration sensor S_n2 are respectively positioned, and a direction in which the first vibration sensor S_n1 and the second vibration sensor S_n2 are arranged may vary according to embodiments.

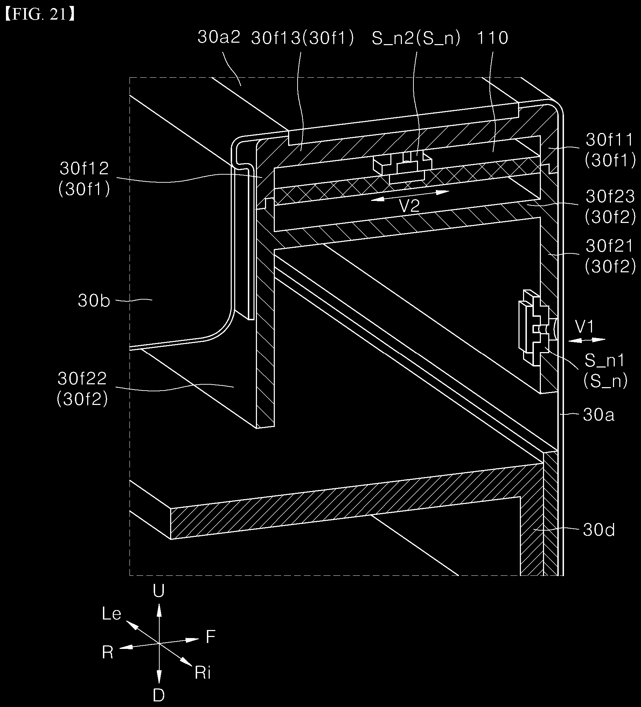

More specifically, as illustrated in FIG. 21, the first vibration sensor S_n1 may be attached to an inner surface of a front portion 30f21 of the second frame 30f2 of the substrate frame 30f having a cross-section shape of a turned-upside down U shape.

As illustrated, the front portion 30f21 of the second frame 30f2 may be in direct contact with the front panel 30a constituting the front portion of the door 30.

Therefore, the first vibration sensor S_n1 may be configured to directly receive the user's knock-on input from the front panel 30a.

A rear portion 30f22 of the second frame 30f2 may directly contact the rear panel 30b of the door 30.

In one example, the second vibration sensor S_n2 may be mounted on the main substrate 110 which is received in a space formed between an upper portion 30f13 of the first frame 30f1 and an upper portion 30f23 of the second frame 30f2.

As shown, the main substrate 110 may be supported on the first frame 30f1 and the second frame 30f2 in a state where a contact area thereof with the first frame 30f1 and the second frame 30f2 is minimized to prevent a short circuit.

Therefore, the vibration generated by the user's knock-on input may be indirectly attenuated through the first frame 30f1, the second frame 30f2, and the main substrate 110 and then transmitted to the second vibration sensor S_n2.

Like the second frame 30f2, the front portion 30f11 of the first frame 30f1 may directly contact the front panel 30a of the door 30, and the rear portion 30f22 of the second frame 30f2 may directly contact the rear panel 30b of the door 30.

In one example, as described above, each of the first vibration sensor S_n1 and the second vibration sensor S_n2 may act as a single-axis directional vibration sensor, such that directions in which the first vibration sensor S_n1 and the second vibration sensor S_n2 are oriented may be different from each other.

In an example, as shown in FIG. 21, the first vibration sensor S_n1 may be disposed on the second frame 30f2 so as to detect front-rear directional vibration V1, and the second vibration sensor S_n2 may be disposed on the main substrate 110 so as to detect vertical vibration V2. That is, the first vibration sensor S_n1 and the second vibration sensor S_n2 may be configured to detect vibrations in directions orthogonal to each other, respectively.

In this way, the positions where the first vibration sensor S_n1 and the second vibration sensor S_n2 are positioned from each other and the directions of the vibrations which may be detected thereby are different from each other. Thus, using the first vibration sensor S_n1 and the second vibration sensor S_n2, the dish washer may be configured to easily distinguish the vibration that occurs during the operation of the dish washer 1 from the vibration caused by the user's knock-on input.,

That is, the user's knock-on input is generally made through the front panel 30a that constitutes the front portion of the door 30.

Furthermore, the front panel 30a has the vertical length and the left-right directional width much larger than a thickness thereof.

Therefore, the vibration generated in the front panel 30a of the door 30 due to the knock-on input may be generated so that a front-rear directional amplitude thereof is much larger than each of a left-right directional amplitude and a vertical amplitude thereof.

Therefore, when the user's knock-on is input to the door, the amplitude of the vibration detected by the first vibration sensor S_n1 may be much larger than the amplitude detected by the second vibration sensor S_n2. However, when the vibration is simply generated during the washing course of the dish washer 1, there is no significant difference between the amplitude detected by the first vibration sensor S_n1 and the amplitude detected by the second vibration sensor S_n2.

As described below, when there is a significant difference between an amplitude of a first vibration signal output from the first vibration sensor S_n1 and an amplitude of a second vibration signal output from the second vibration sensor S_n2, the controller 100 may be configured to determine that the user's knock-on is input to the door. However, when there is substantially no difference between an amplitude of a first vibration signal output from the first vibration sensor S_n1 and an amplitude of a second vibration signal output from the second vibration sensor S_n2, the controller 100 may be configured to easily determine that the vibration is not a vibration caused by the user's knock-on.

### [configuration and control method of controller]

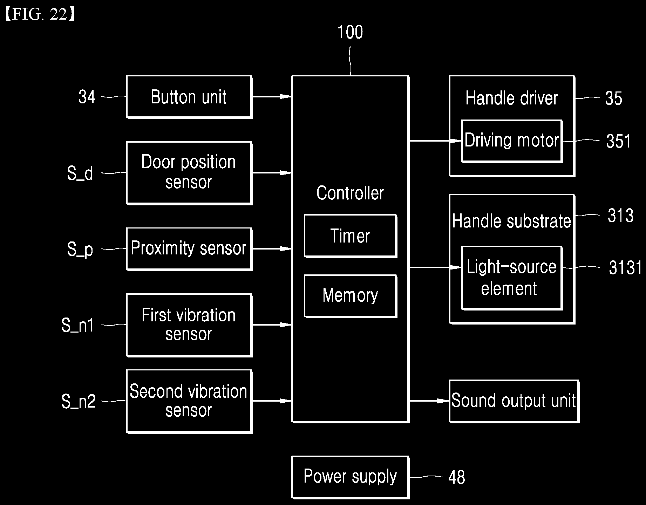

Hereinafter, referring to FIG. 22, the configuration of the controller 100 included in the dish washer 1 according to an embodiment of the present disclosure will be described.

As shown in FIG. 22, the dish washer 1 according to an embodiment of the present disclosure may include the controller 100 for controlling each of the functional modules of the dish washer.

As known in the art, controller 100 may be configured to be embodied in various forms such as a microcontroller, a microcomputer, or a microprocessor that may be mounted on the aforementioned main substrate 110.

First, the controller 100 may be configured to be electrically connected to the driving motor 351 of the handle driver 35. The controller 100 may be configured to start or stop the operation of the driving motor 351 by controlling the power supplied to the driving motor 351 from the power supply 48 as described below. The controller 100 may be configured to supply the power to the driving motor 351 to rotate in a forward direction to move the pop-up handle 31 in the frontward direction, or supply the power to the driving motor 351 to rotate in a reverse direction to move the pop-up handle 31 in the backward direction.

When the user's intention to open the door 30 is identified as being present using the proximity sensor S_p and the knock-on sensor S_n, the controller 100 may be configured to supply the power to the driving motor 351 of the handle driver 35 through the power supply 48 to drive the driving motor 351 in the forward direction to move the pop-up handle 31 in the frontward direction to the extended position Pd.

Furthermore, when a predetermined waiting time has elapsed after the pop-up handle 31 has moved to the extended position Pd, the controller 100 may be configured to supply the power to the driving motor 351 to drive the driving motor 351 in the reverse direction to move the pop-up handle 31 backward to the retracted position.

Furthermore, the controller 100 may be configured to be electrically connected to the button unit 34 for inputting a user's manipulation command. When the user's power on-off manipulation input, washing course selection manipulation, or option selection manipulation is input through the button unit 34, the button unit 34 may transmit a corresponding electrical signal thereto to the controller 100.

When the electrical signal has been transmitted from the button unit 34 to the controller, the controller 100 may be configured to turn on/off the power of the dish washer 1 or to control the dish washer 1 to perform an individual cycle of the dish washer 1 according to the selected washing course and the selected operation mode.

Although not shown, the user's manipulation command may be input through other input means such as a user's wireless terminal, etc. in addition to the button unit 34.

Furthermore, the controller 100 may be configured to be electrically connected to the door position sensor S_d. The controller 100 may be configured to determine whether the door 30 is currently closed or opened based on the signal received from the door position sensor S_d, and to identify absence or presence of the user's intention to open the door 30 in a state in which the door 30 is closed, and to operate the handle driver 35 to move the pop-up handle 31 in the frontward direction to the extended position Pd when the door 30 needs to be opened.

Furthermore, the controller 100 may be configured to be electrically connected to the proximity sensor S_p. The controller 100 may be configured to determine whether the user is approaching a position within a specific detection range from door 30 based on the signal received from the proximity sensor S_p.

As described above, the proximity sensor S_p may include one of a radar sensor, an image sensor, or an infrared sensor.

Furthermore, the controller 100 may be configured to be electrically connected to the first vibration sensor S_n1 and the second vibration sensor S_n2 constituting the knock-on sensor S_n. As described above, the first vibration sensor S_n1 and the second vibration sensor S_n2 detect the vibrations generated from the dish washer 1. The controller 100 may be configured to determine whether the user's intention to open the door 30 is input during the washing course based on a comparing result between the amplitude of the first vibration signal and the amplitude of the second vibration signal respectively received from the first vibration sensor S_n1 and the second vibration sensor S_n2. Although not shown, the controller 100 may be configured to further include a means for amplifying each of the amplitude of the first vibration signal and the amplitude of the second vibration signal in order to clearly detect the user's knock-on input.

Furthermore, the controller 100 may be configured to be electrically connected to the light-source element 3131 and the vibration element 3132 mounted on the handle substrate 313.

The controller 100 may be configured to provide the power to the light-source element 3131 to generate the visible light or other types of light at the same time as a time when the forward movement of the pop-up handle 31 is initiated or before the forward movement of the pop-up handle 31 is initiated, thereby visually indicating to the user that the pop-up handle 31 is being operating normally and that the pop-up handle 31 will be moved forwards toward the extended position Pd.

As described above, the light-source element 3131 may be embodied as the LED element that may receive the power to emit predetermined visible light.

Furthermore, the controller 100 may be configured to be electrically connected to an audio output unit that generates voice output or sound output.

When the controller 100 has identified that the user's intention to open the door 30 is present using the proximity sensor S_p and the knock-on sensor S_n, the controller 100 may be configured to generate a voice alarm or a sound alarm through the audio output unit to preliminarily notify that the pop-up handle 31 will move forwards.

For example, the voice alarm may include guidance information such as "I will extend the handle."

In one example, the controller 100 may be configured to be electrically connected to a memory and a timer. The controller 100 may be configured to retrieve an operation condition and a time condition related to each of the cycles that are pre-stored in the memory for each washing course and to generate a control signal for controlling a progress and an end of the cycle according to the washing course based on the operation condition and the time condition.

In addition, as described later, information about a set time that serves as a reference time used to determine absence or presence of the user's intention to open the door 30 may be further stored in the memory.

Furthermore, the controller 100 may be configured to measure an elapsed time of each of the cycles using the timer and determine whether each of the cycles has been completed based on a comparing result of the measured time with the pre-stored time condition related to each of the cycles.

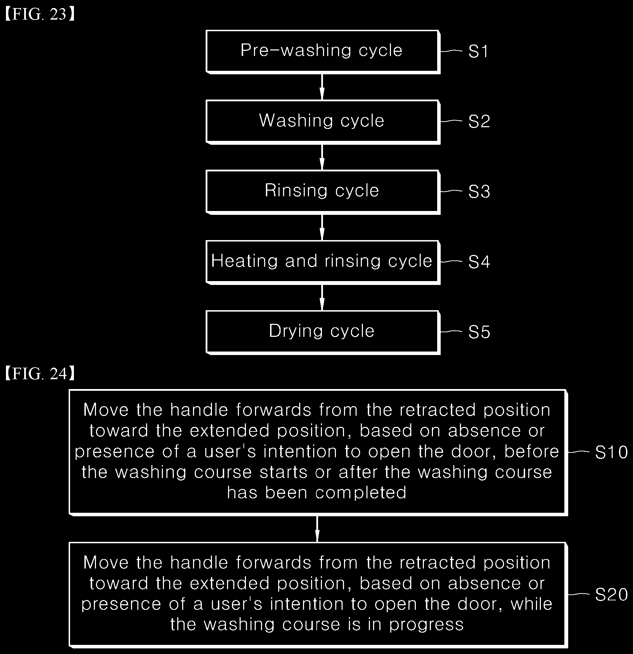

In this regard, the cycles may include a pre-washing cycle S1, a washing cycle S2, a rinsing cycle S3, a heating and rinsing cycle S4, and a drying cycle S5 as shown in FIG. 23. The controller 100 may be configured to control the dish washer 1 so that the washing course including a combination of at least one of the above listed cycles according to the user's selection is performed.

Hereinafter, a method for controlling the dish washer 1 according to the present disclosure will be described with reference to FIG. 23 to FIG. 26.

As illustrated in FIG. 23, the controller 100 may be configured to generally control progress of the washing course of the dish washer 1 including, for example, at least one of the pre-washing cycle S1, the washing cycle S2, the rinsing cycle S3, the heating and rinsing cycle S4, and the drying cycle S5.

The pre-washing cycle S1 refers to a cycle in which the washing water is circulated under an operation of the washing pump 45 without injecting the detergent through the detergent supply device and an amount of contamination is measured using a turbidity sensor (not shown) provided in the sump 41. The washing cycle S2 refers to a cycle in which dishes are washed by circulating the washing water while injecting the detergent through the detergent supply device.

Each of the rinsing cycle S3 and the heating and rinsing cycle S4 refers to a cycle in which rinse is injected from the detergent supply device and the washing water is circulated to remove the detergent remaining on the dishes.

During the heating and rinsing cycle S4, the heated washing water is supplied so that the dishes may be heated to a predetermined temperature. Thus, the drying efficiency of the dishes may be improved and the drying time may be shortened in the drying cycle S5 that is performed after the completion of the rinsing cycle S3 and heating and rinsing cycle S4.

The above detailed cycles may be controlled to be omitted or to be combined with each other so as to be performed repeatedly depending on the selected washing course settings and options.

In this regard, a water discharge cycle of the washing water used in each of the cycles and a water supply cycle that supplies new washing water may be included between temporally adjacent ones of the cycles.

The water supply cycle may be included before the pre-washing cycle S1.

The water discharge cycle and the water supply cycle may be performed between the pre-washing cycle S1 and the washing cycle S2, between the washing cycle S2 and the rinsing cycle S3, and between the heating and rinsing cycle S4 and the rinsing cycle S3. The water discharge cycle may be performed between the heating and rinsing cycle S4 and the drying cycle S5.

The water supply cycle may be performed by controlling an aqua stop device (not shown) included in the water supply 43 to supply the washing water to the sump 41 through a water supply path. The water discharge cycle may be performed by controlling the water discharger 44 connected to the sump 41 to discharge the washing water to the outside out of the dish washer 1 through a water discharge path.

In this regard, when the user's intention to open the door 30 is identified as being present using the proximity sensor S_p before the washing course that is performed in the above order of the cycles is started or after the washing course has been completed, the controller 100 may be configured to drive the handle driver 35 in the forward direction to drive the pop-up handle 31 to automatically move forwards from the retracted position Pa to the extended position Pd.

Furthermore, after a predetermined waiting time has elapsed after the pop-up handle 31 has moved to the extended position Pd, the controller 100 may be configured to drive the handle driver 35 in the reverse direction, so that the pop-up handle 31 automatically moves backwards from the extended position Pd to the retracted position Pa.

Furthermore, when the user's intention to open the door 30 is additionally identified as being present using the aforementioned knock-on sensor S_n, the controller 100 may be configured to control the pop-up handle 31 to move forwards from the retracted position Pa toward the extended position Pd even during the washing cycle.

This is to deal with a case where the door 30 is opened while the washing cycle is in progress, for example, in order to add the dishes to be washed into the washing space in the tub.

When the forward movement of the pop-up handle 31 is initiated during the progress of the washing course, the controller 100 may be configured to temporarily stop the progress of the washing course in consideration of water leakage prevention and user safety.

FIG. 24 illustrates an example of a control method of the dish washer 1 according to the present disclosure, in which the method includes operations S10 and S20 of moving the pop-up handle 31 in the frontward direction from the retracted position to the extended position, based on a combination of a determination result of whether the washing course of the dish washer 1 is in progress, and a determination result of whether the user intends to open the door 30.

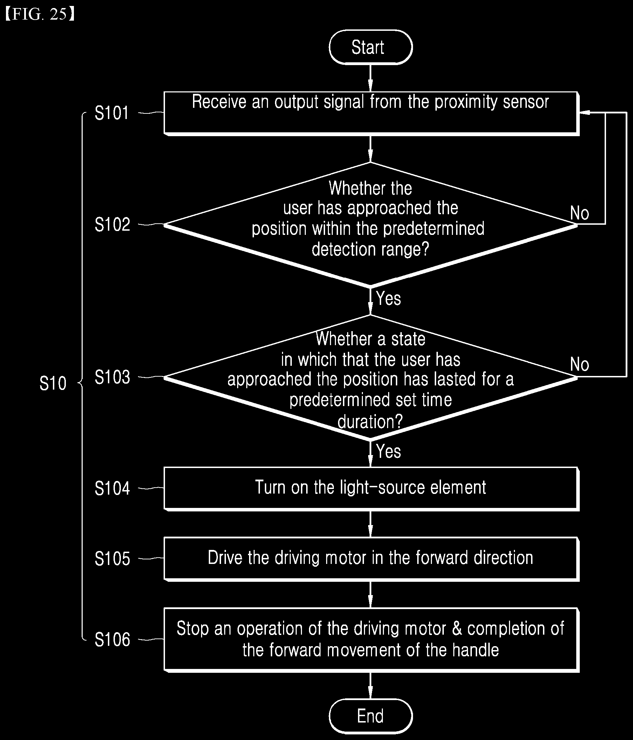

First, FIG. 25 illustrates detailed operations of operation S10.

Referring to FIG. 25, the controller 100 may be configured to receive an output signal from the proximity sensor S_p before the start of the selected washing course and after the completion of the selected washing course in S101.

When the output signal has been received from the proximity sensor S_p in operation S101, the controller 100 is configured to identify whether a user's approaching a position within the detection range of the proximity sensor S_p is detected in S102.

In this regard, as described above, the vertical minimum detection height H_min of the proximity sensor S_p may be in a range of 100 cm inclusive to 110 cm inclusive, preferably 105 cm.

Furthermore, the maximum horizontal detection distance L_max of the proximity sensor S_p may be in a range of 75 cm inclusive to 85 cm inclusive, preferably 80 cm.

When it is determined that the proximity of the user to the position within the detection range of the proximity sensor S_p has been detected in operation S102, the controller 100 may be configured to determine whether the proximity state of the user to the position in the detection range lasts for a predetermined set time duration after the proximity of the user to the position has been detected in S103.

In this regard, the set time duration may be in a range of 0.9 seconds inclusive to 1.1 seconds inclusive, preferably 1 second.

Upon determination that the proximity state of the user to the position in the detection range has lasted for the predetermined set time duration in operation S103, the controller 100 may be configured to determine that the user has the intention to open the door 30.

When the user's intention to open the door 30 has been identified as being present before the start of the washing course or after the completion of the washing course, the controller 100 may be configured to supply the power to the handle driver 35 to drive the handle driver 35 in the forward direction, thereby automatically moving the pop-up handle 31 in the frontward direction from the retracted position Pa to the extended position Pd in S105.

In one example, when the user's intention to open the door 30 has been identified as being present, the controller 100 may be configured to supply the power to the light-source element 3131 disposed inside the pop-up handle 31 to turn on the light-source element 3131 in S104.

In this regard, the controller 100 may be configured to turn on the light-source element 3131 before the operation of the handle driver 35 is initiated or simultaneously with the start of the operation of the handle driver 35. Thus, the user may intuitively and visually recognize that the pop-up handle 31 will begin moving forwards before or simultaneously with the start of the movement of the handle.

Although not shown, the controller 100 may be configured to control the sound output unit to generate an audio alarm or an acoustic alarm including information indicating that the forward movement of the pop-up handle 31 will be initiated, before the operation of the handle driver 35 is initiated or simultaneously with the start of the operation of the handle driver 35.

In one example, when the pop-up handle 31 has completed the forward movement to the extended position Pd after the operation of the handle driver 35 has been initiated in operation S105, the controller 100 may be configured to cut off the power supply to the handle driver 35 to stop the position of the pop-up handle 31 at the extended position Pd in S106.

Furthermore, although not shown, when the forward movement of the pop-up handle 31 has been completed, the controller 100 may be configured to turn off the light-source element 3131 by cutting off the power supply to the light-source element 3131 or to keep the light-source element 3131 in the turned-on state by maintaining the power supply thereto.

When the forward movement of the pop-up handle 31 to the extended position Pd has been completed, the user may easily open the door 30 while holding the pop-up handle 31.

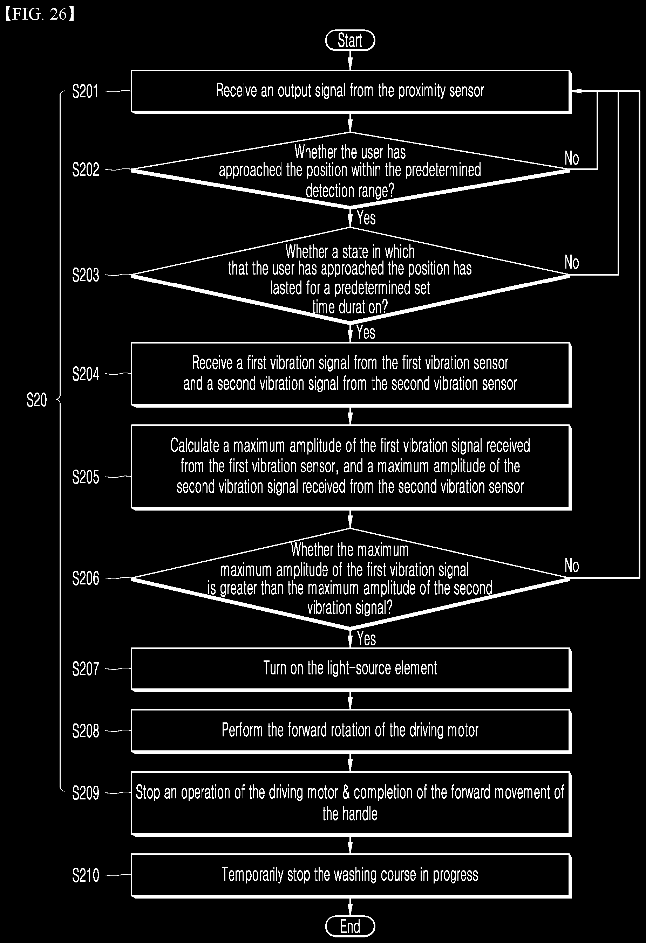

Next, FIG. 26 shows detailed operations of operation S20.

Referring to FIG. 26, the controller 100 may be configured to receive the output signal from the proximity sensor S_p during the progress of the selected washing course in S201.

When the output signal has been received from the proximity sensor S_p in operation S201, the controller 100 may be configured to determine whether the user's approaching the position within the detection range of the proximity sensor S_p is detected S202.

In this regard, as described above, the vertical minimum detection height H_min of the proximity sensor S_p may be in a range of 100 cm inclusive to 110 cm inclusive, preferably 105 cm.

Furthermore, the maximum horizontal detection distance L_max of the proximity sensor S_p may be in a range of 75 cm inclusive to 85 cm inclusive, preferably 80 cm.

When it is determined that the proximity of the user to the position within the detection range of the proximity sensor S_p has been detected in operation S202, the controller 100 may be configured to determine whether the proximity state of the user to the position in the detection range lasts for a predetermined set time duration after the proximity of the user to the position has been detected in S203.

In this regard, the set time duration may be in a range of 0.9 seconds inclusive to 1.1 seconds inclusive, preferably 1 second.

Upon determination that the proximity state of the user to the position in the detection range has lasted for the predetermined set time duration in operation S203, the controller 100 may be configured to receive the output signals from the first vibration sensor S_n1 and the second vibration sensor S_n2 constituting the knock-on sensor S_n in S204.

In this regard, the output signal of the first vibration sensor S_n1 may be the first vibration signal, and the output signal of the second vibration sensor S_n2 may be the second vibration signal.

When the first vibration signal has been received from the first vibration sensor S_n1 and the second vibration signal has been received from the second vibration sensor S_n2 in operation S204, the controller 100 may be configured to calculate a maximum amplitude of the first vibration signal and a maximum amplitude of the second vibration signal in S205.

In this regard, in order to facilitate the calculation of and the comparison between the maximum amplitudes thereof, each of the first vibration signal and the second vibration signal may be amplified at a predetermined ratio after having been received by the controller 100.

When the maximum amplitude of the first vibration signal and the maximum amplitude of the second vibration signal have been calculated in operation S205, the controller 100 may be configured to compare the maximum amplitude of the first vibration signal with the maximum amplitude of the second vibration signal in S206.

When the controller 100 determines that the maximum amplitude of the first vibration signal is greater than the maximum amplitude of the second vibration signal based on a result of the comparison in operation S206, the controller 100 may be configured to determine that the user's knock-on input is input into the door 30 and to determine that the user has the intention to open the door 30.

Conversely, when the controller 100 determines that the maximum amplitude of the first vibration signal is smaller than or equal to the maximum amplitude of the second vibration signal based on a result of the comparison in operation S206, the controller 100 may be configured to determine that the received first vibration signal and second vibration signal are not generated due to the user's knock-on input. Thus, the process returns to the aforementioned operation S201 and following operations are repeated.

In one example, when it is determined that the user intends to open the door 30 during the progress of the washing cycle, the controller 100 may be configured to supply the power to the handle driver 35 to drive the handle driver 35 in the forward direction, thereby automatically moving the pop-up handle 31 in the frontward direction from the retracted position Pa to the extended position Pd in S208.

In one example, when the user's intention to open the door 30 has been identified as being present, the controller 100 may be configured to supply the power to the light-source element 3131 disposed inside the pop-up handle 31 to turn on the light-source element 3131 in S207.

In this regard, the controller 100 may be configured to turn on the light-source element 3131 before the operation of the handle driver 35 is initiated or simultaneously with the start of the operation of the handle driver 35. Thus, the user may intuitively and visually recognize that the pop-up handle 31 will begin moving forwards before or simultaneously with the start of the forward movement of the handle.

Although not shown, the controller 100 may be configured to control the sound output unit to generate an audio alarm or an acoustic alarm including information indicating that the forward movement of the pop-up handle 31 will be initiated before the operation of the handle driver 35 is initiated or simultaneously with the start of the operation of the handle driver 35.

In one example, when the pop-up handle 31 has completed the forward movement to the extended position Pd after the operation of the handle driver 35 has been initiated in operation S206, the controller 100 may be configured to cut off the power supply to the handle driver 35 to stop the position of the pop-up handle 31 at the extended position Pd in S209.

Furthermore, although not shown, when the forward movement of the pop-up handle 31 has been completed, the controller 100 may be configured to turn off the light-source element 3131 by cutting off the power supply to the light-source element 3131 or to keep the light-source element 3131 in the turned-on state by maintaining the power supply thereto.

When the forward movement of the pop-up handle 31 to the extended position Pd has been completed, the user may open the door 30 while holding the pop-up handle 31. However, since the dish washer 1 is currently in the washing process, it is necessary to stop the washing process for the safety reason as described above.

Therefore, the controller 100 may be configured to control the dish washer 1 so that after the forward movement of the pop-up handle 31 is initiated by starting to operate the handle driver 35 in operation S208, the washing course currently in progress in the dish washer 1 is temporarily stopped in S210.

In this regard, the controller 100 may be configured to control the washing course so as to be temporarily stopped at least before the operation of the handle driver 35 is stopped in operation S209 or at the same time as a time when the operation of the handle driver 35 is stopped in operation S209.

Thus, the user may be effectively prevented from being burned by high-temperature washing water or high-temperature airflow flowing out from the tub 20 due to the door 30 being opened while the washing course is in progress.

Although the embodiments of the present disclosure have been described in more detail with reference to the accompanying drawings, the present disclosure is not necessarily limited to these embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of the present disclosure is not limited by these embodiments. Therefore, it should be understood that the embodiments described above are not restrictive but illustrative in all respects. In addition, even though an effect of a configuration of the present disclosure is not explicitly described in describing the embodiment of the present disclosure above, it is obvious that the predictable effect from the configuration should be recognized.

## Claims

1. A dish washer comprising:
a tub constructed to accommodate a dish therein and to have an open front surface and a washing space defined therein communicating with the open front surface, wherein one washing course selected from among a plurality of washing courses is performed in the washing space, wherein each of the plurality of washing courses is composed of a combination of detailed cycles;
a door configured to open or close the open front surface of the tub;
a handle configured to automatically reciprocate between an extended position and a retracted position, wherein at the extend position, the handle protrudes in a frontward direction from the door, wherein at the retracted position, the handle is at least partially accommodated within the door;
a handle driver disposed within the door and configured to move the handle from the retracted position toward the extended position or from the extended position toward the retracted position; and
a controller configured to control power to be supplied to the handle driver to determine whether to operate the handle driver,
wherein the controller is configured to control the handle driver to move the handle forwards from the retracted position toward the extended position, based on absence or presence of a user's intention to open the door.

2. The dish washer of claim 1, wherein the controller configured to control the handle driver to move the handle forwards from the retracted position toward the extended position, based on absence or presence of a user's intention to open the door is further configured to control the handle driver to move the handle forwards from the retracted position toward the extended position, based on absence or presence of a user's intention to open the door, before the washing course starts or after the washing course has been completed.

3. The dish washer of claim 2, wherein the controller configured to control the handle driver to move the handle forwards from the retracted position toward the extended position, based on absence or presence of a user's intention to open the door, before the washing course starts or after the washing course has been completed is further configured to:
determine whether the user has an intention to open the door before the washing course starts or after the washing course has been completed; and
upon determination that the user has the intention to open the door, supply power to the handle driver to operate the handle driver so that the handle moves forwards from the retracted position toward the extended position.

4. The dish washer of claim 3, wherein the dish washer further comprises a proximity sensor for detecting whether the user has approached a position within a predetermined detection range from the door,
wherein the controller configured to determine whether the user has the intention to open the door is further configured to:
receive an output signal from the proximity sensor;
determine whether the user has approached the position within the predetermined detection range, based on the output signal received from the proximity sensor; and
upon determination that the user has approached the position within the predetermined detection range, determine whether a state in which that the user has approached the position has lasted for a predetermined set time duration; and
upon determination that the state in which that the user has approached the position has lasted for the predetermined set time duration; determine that the user has the intention to open the door.

5. The dish washer of claim 4, wherein the proximity sensor includes a radar sensor disposed inside the door and configured to detect whether the user approaches the door through a sensor hole extending through a top surface of the door,
wherein a sensing surface of the radar sensor is oriented in a tilted state so as to face in a frontward and upward direction of the door.

6. The dish washer of claim 5, wherein a tilting angle of the sensing surface of the radar sensor is in a range of 25 degrees inclusive to 35 degrees inclusive.

7. The dish washer of claim 4, wherein upon determination that the user having a height greater than or equal to a minimum detection height of the proximity sensor in a vertical direction has approached a position having a distance smaller than or equal to a maximum detection distance from the proximity sensor in a horizontal direction, the controller is further configured to determine that the user has approached the position within the predetermined detection range.

8. The dish washer of claim 7, wherein the minimum detection height is in a range of 100 cm inclusive to 110 cm inclusive.

9. The dish washer of claim 7, wherein the maximum detection distance is in a range of 75 cm inclusive to 85 cm inclusive.

10. The dish washer of claim 4, wherein the set time duration is in a range of 0.9 seconds to 1.1 seconds inclusive.

11. The dish washer of claim 3, wherein the dish washer further comprises a light-source element disposed inside the handle, and configured to receive power to generate visible light, and irradiate the generated visible light to an outside out of the handle,
wherein the controller configured to control the handle driver to move the handle forwards from the retracted position toward the extended position, based on absence or presence of a user's intention to open the door, before the washing course starts or after the washing course has been completed is further configured to:
upon determination that the user has the intention to open the door, supply power to the light-source element to turn on the light-source element before the operation of the handle driver is started or simultaneously with the start of the operation of the handle driver.

12. The dish washer of claim 1, wherein the controller configured to control the handle driver to move the handle forwards from the retracted position toward the extended position, based on absence or presence of a user's intention to open the door is further configured to control the handle driver to move the handle forwards from the retracted position toward the extended position, based on absence or presence of a user's intention to open the door, while the washing course is in progress.

13. The dish washer of claim 12, wherein the controller configured to control the handle driver to move the handle forwards from the retracted position toward the extended position, based on absence or presence of a user's intention to open the door, while the washing course is in progress is further configured to:
determine whether the user has an intention to open the door while the washing course is in progress; and
upon determination that the user has the intention to open the door, supply power to the handle driver to operate the handle driver so that the handle moves forwards from the retracted position toward the extended position.

14. The dish washer of claim 13, wherein the dish washer further comprises:
a proximity sensor for detecting whether the user has approached a position within a predetermined detection range from the door; and
a first vibration sensor and a second vibration sensor respectively positioned at different locations inside the door and configured to detect the user's knock-on input through the door,
wherein the controller configured to determine whether the user has the intention to open the door is further configured to:
receive an output signal from the proximity sensor;
determine whether the user has approached the position within the predetermined detection range, based on the output signal received from the proximity sensor;
upon determination that the user has approached the position within the predetermined detection range, determine whether a state in which that the user has approached the position has lasted for a predetermined set time duration;
upon determination that the state in which that the user has approached the position has lasted for the predetermined set time duration, receive a first vibration signal from the first vibration sensor and a second vibration signal from the second vibration sensor;
calculate a maximum amplitude of the first vibration signal received from the first vibration sensor, and a maximum amplitude of the second vibration signal received from the second vibration sensor; and
compare the maximum amplitude of the first vibration signal with the maximum amplitude of the second vibration signal; and
upon determination that the maximum amplitude of the first vibration signal is greater than the maximum amplitude of the second vibration signal, determine that the user has the intention to open the door.

15. The dish washer of claim 14, wherein the first vibration sensor is closer to a front surface of the door than the second vibration sensor is.

16. The dish washer of claim 14, wherein the first vibration sensor detects vibration in a first axial direction,
wherein the second vibration sensor detects vibration in a second axial direction,
wherein the first axial direction and the second axial direction are orthogonal to each other.

17. The dish washer of claim 16, wherein the first axial vibration is a horizontal vibration, and the second axial vibration is a vertical vibration.

18. The dish washer of claim 13, wherein the dish washer further comprises a light-source element disposed inside the handle, and configured to receive power to generate visible light, and irradiate the generated visible light to an outside out of the handle,
wherein the controller configured to control the handle driver to move the handle forwards from the retracted position toward the extended position, based on absence or presence of a user's intention to open the door, while the washing course is progress is further configured to:
upon determination that the maximum amplitude of the first vibration signal is greater than the maximum amplitude of the second vibration signal, supply power to the light-source element to turn on the light-source element before or simultaneously with start of the operation of the handle driver.

19. The dish washer of claim 13, wherein the controller configured to control the handle driver to move the handle forwards from the retracted position toward the extended position, based on absence or presence of a user's intention to open the door, while the washing course is progress is further configured to:
when the forward movement of the handle to the extended position has been completed after operating the handle driver, stop the operation of the handle driver; and
after the handle driver starts to operate, temporarily stop the washing course in progress.

20. The dish washer of claim 13, wherein the controller configured to temporarily stop the washing course in progress is further configured to temporarily stop the washing course in progress before the operation of the handle driver is stopped or simultaneously with the stop of the operation of the handle driver.
